# EUROPEAN PATENT APPLICATION

(11) **EP 4 679 224 A1**
(43) Date of publication of application: **14.01.2026**
(21) Application number: 24807323.1
(22) Date of filing: 06.03.2024
(51) Int. Cl.: G06F 1/16, G06F 3/0354, H02J 50/00, H02J 50/10

(54) **FOLDABLE ELECTRONIC DEVICE COMPRISING CHARGING COIL AND MAGNET**

(30) Priority: 17.05.2023 KR 20230063996; 01.06.2023 KR 20230071103
(71) Applicant: Samsung Electronics Co., Ltd., Suwon-si, Gyeonggi-do 16677 (KR)
(72) Inventor: HAN, Junhee, Suwon-si, Gyeonggi-do 16677 (KR); KIM, Seunghun, Suwon-si, Gyeonggi-do 16677 (KR); KIM, Jeongseob, Suwon-si, Gyeonggi-do 16677 (KR); AN, Yonghee, Suwon-si, Gyeonggi-do 16677 (KR); LEE, Seokwoo, Suwon-si, Gyeonggi-do 16677 (KR); CHO, Hyongrae, Suwon-si, Gyeonggi-do 16677 (KR)
(74) Representative: Gulde & Partner
(86) International application number: PCT/KR2024/002870
(87) International publication number: WO 2024/237442

(57) **Abstract**

A foldable electronic device according to one embodiment of the present invention may comprise: a hinge module including a first hinge assembly and a second hinge assembly; a first housing of which at least a part is coupled to the first hinge assembly and which includes a first printed circuit board; a second housing of which at least a part is coupled to the second hinge assembly and which is foldable and unfoldable with respect to the first housing; a charging coil disposed between the first hinge assembly and the second hinge assembly; a first magnet and/or a second magnet disposed between the first hinge assembly and the second hinge assembly; and a hinge housing which covers the hinge module, the charging coil, the first magnet and/or the second magnet and which includes a conductive material, wherein the hinge housing can include: a slot formed at a position corresponding to the charging coil; and a non-conductive plate disposed in the slot.

## Description

### [Technical Field]

Various embodiments of the disclosure relate to a foldable electronic device including at least one charging coil and at least one magnet.

### [Background Art]

The use of foldable electronic devices that are folded and unfolded horizontally or vertically is increasing, and various functions are provided to foldable electronic devices.

The foldable electronic device may operate in a state in which a first housing and a second housing are folded or an unfolded about a hinge module (e.g., a hinge plate).

The foldable electronic device may operate in an in-folding and/or out-folding manner by rotating the first housing and the second housing using the hinge module.

### [Disclosure of Invention]

### [Technical Problem]

A foldable electronic device may include a flexible display disposed at least partially across a first housing, a hinge module, and a second housing.

In the foldable electronic device, when the first housing and the second housing are folded using the hinge module, the flexible display may also be folded together, and when the first housing and the second housing are unfolded, the flexible display may also be unfolded together.

The foldable electronic device may allow writing and/or drawing to be input on a flexible display using a stylus pen (e.g., an electronic pen).

The foldable electronic device may require a configuration capable of stably and detachably attaching the stylus pen to an exterior of a hinge housing (e.g., a hinge cover) and a configuration capable of wirelessly charging the stylus pen attached to the exterior of the hinge housing.

Various embodiments of the disclosure may provide a foldable electronic device in which a stylus pen is detachably attached to an outer surface of a hinge housing using a magnet in a state in which a first housing and a second housing is folded and/or unfolded through a hinge module, and the stylus pen may be wirelessly charged using a charging coil.

The technical problems to be addressed by this disclosure are not limited to those described above, and other technical problems not mentioned above may be clearly understood by a person ordinarily skilled in the related art to which the disclosure pertains.

### [Solution to Problem]

According to an embodiment of the disclosure, a foldable electronic device may include a hinge module including a first hinge assembly and a second hinge assembly, a first housing at least partially coupled to the first hinge assembly and including a first printed circuit board, and a second housing at least partially coupled to the second hinge assembly and configured to be foldable and unfoldable with respect to the first housing. According to an embodiment, the foldable electronic device may include a charging coil disposed between the first hinge assembly and the second hinge assembly. According to an embodiment, the foldable electronic device may include a first magnet and/or a second magnet disposed between the first hinge assembly and the second hinge assembly, and a hinge housing configured to cover the hinge module, the charging coil, and the first magnet and/or the second magnet, and including a conductive material. According to an embodiment, the hinge housing may include a slot formed at a position corresponding to the charging coil and a non-conductive plate disposed in the slot.

### [Advantageous Effects of Invention]

According to various embodiments of the disclosure, in a state in which the first housing and the second housing are folded and/or unfolded through a hinge module, a stylus pen (e.g., an electronic pen) may be detachably attached to an outer surface of a hinge housing using a magnet, and the stylus pen may be wirelessly charged using a charging coil.

In addition, various effects that are directly or indirectly understood from the present document may be provided.

### [Brief Description of Drawings]

In connection with the description of the drawings, the same or similar components may be denoted by the same or similar reference numerals.
FIG. 1 is a block diagram of an electronic device in a network environment, according to various embodiments of the disclosure.
FIGS. 2A and 2B are front and rear views illustrating a foldable electronic device in an unfolded state according to various embodiments of the disclosure.
FIGS. 3A and 3B are front and rear views illustrating a foldable electronic device in a folded state according to various embodiments of the disclosure.
FIG. 4 is a schematic exploded perspective view illustrating a foldable electronic device according to various embodiments of the disclosure.
FIG. 5A is a view schematically illustrating a portion of a foldable electronic device in a folded state, according to an embodiment of the disclosure.
FIG. 5B is a cross-sectional view schematically illustrating the foldable electronic device of FIG. 5A according to an embodiment of the disclosure, taken along line B-B'.
FIG. 6A is a view schematically illustrating a portion of a foldable electronic device in an unfolded state, according to an embodiment of the disclosure.
FIG. 6B is a cross-sectional view schematically illustrating the foldable electronic device of FIG. 6A according to an embodiment of the disclosure, taken along line C-C'.
FIG. 7A is a view schematically illustrating a portion of a foldable electronic device including a charging coil and magnets in an unfolded state, according to an embodiment of the disclosure.
FIG. 7B is a cross-sectional view schematically illustrating the foldable electronic device of FIG. 7A, according to an embodiment of the disclosure, taken along line D-D'.
FIG. 8 is a cross-sectional view schematically illustrating a foldable electronic device including a charging coil and magnets, according to various embodiments of the disclosure.
FIG. 9 is a cross-sectional view schematically illustrating a foldable electronic device including at least one charging coil and at least one magnet, according to various embodiments of the disclosure.
FIG. 10 is a view illustrating an example in which a pen input portion of the stylus pen of FIG. 9 according to an embodiment of the disclosure is disposed in an opposite direction to the foldable electronic device.
FIG. 11 is a view schematically illustrating a portion of a foldable electronic device including a first printed circuit board and a third printed circuit board in an unfolded state, according to an embodiment of the disclosure.
FIG. 12 is a cross-sectional view schematically illustrating a foldable electronic device including at least one magnet, according to an embodiment of the disclosure.
FIG. 13 is a view schematically illustrating an example in which a stylus pen is attached to a hinge housing while the foldable electronic device including at least one magnet is in an unfolded state, according to an embodiment of the disclosure.
FIG. 14 is a block diagram schematically illustrating some components of an electronic device according to an embodiment of the disclosure.

### [Mode for the Invention]

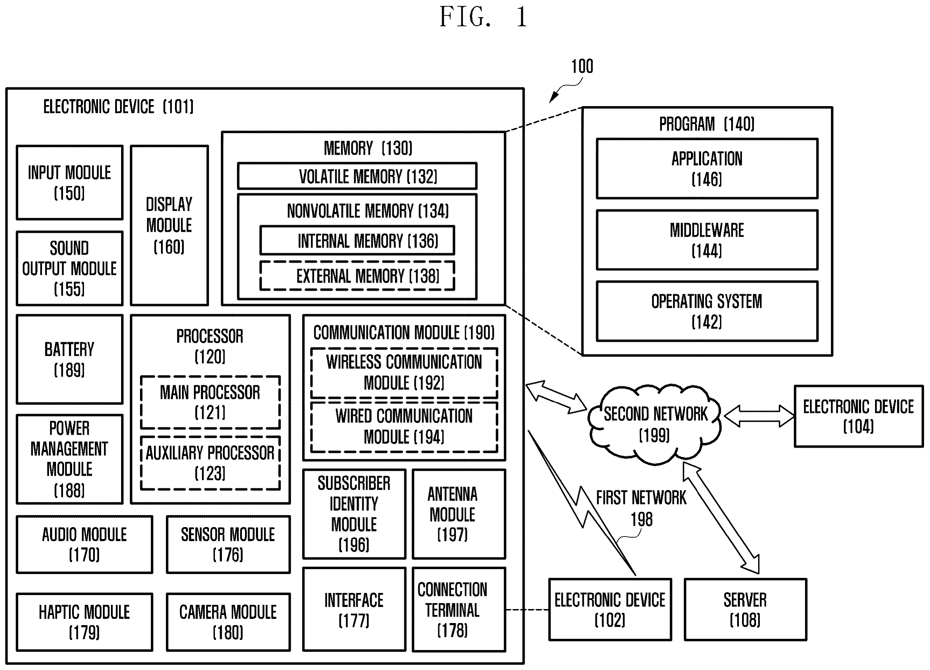

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

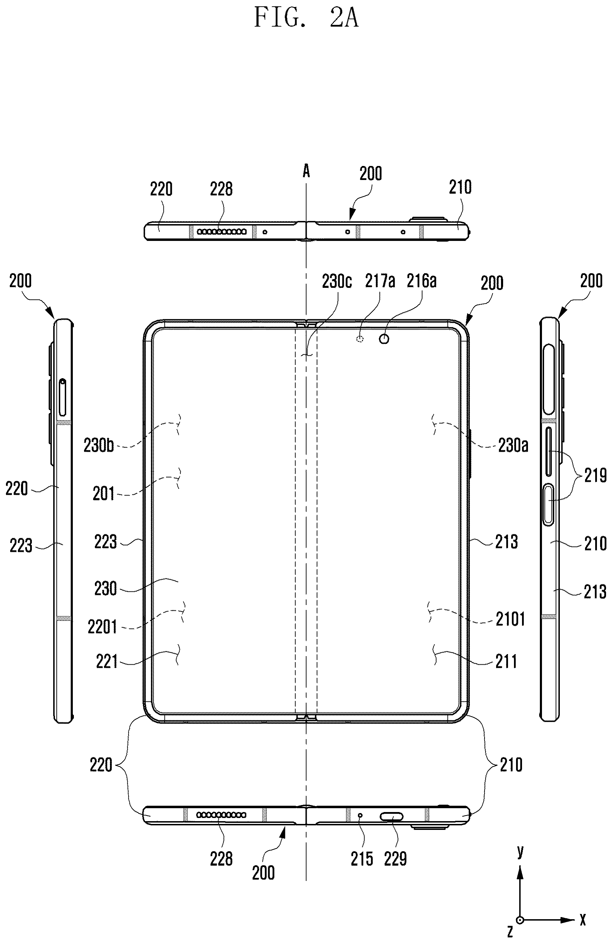

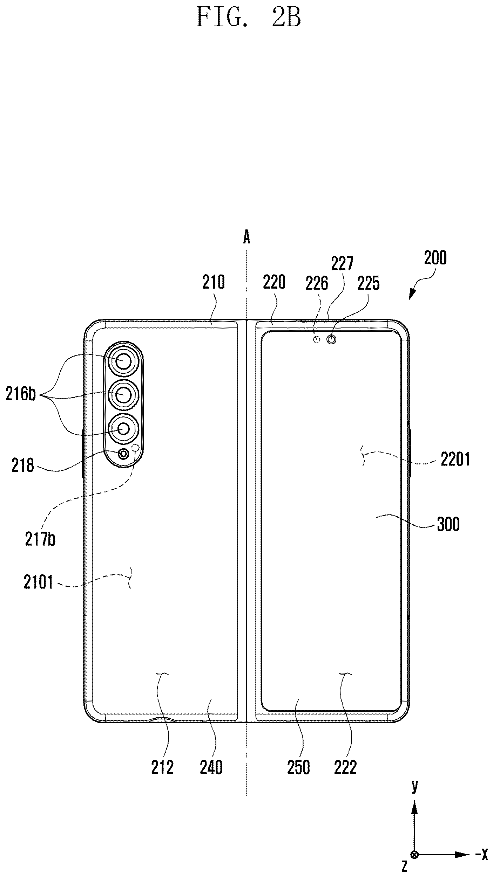

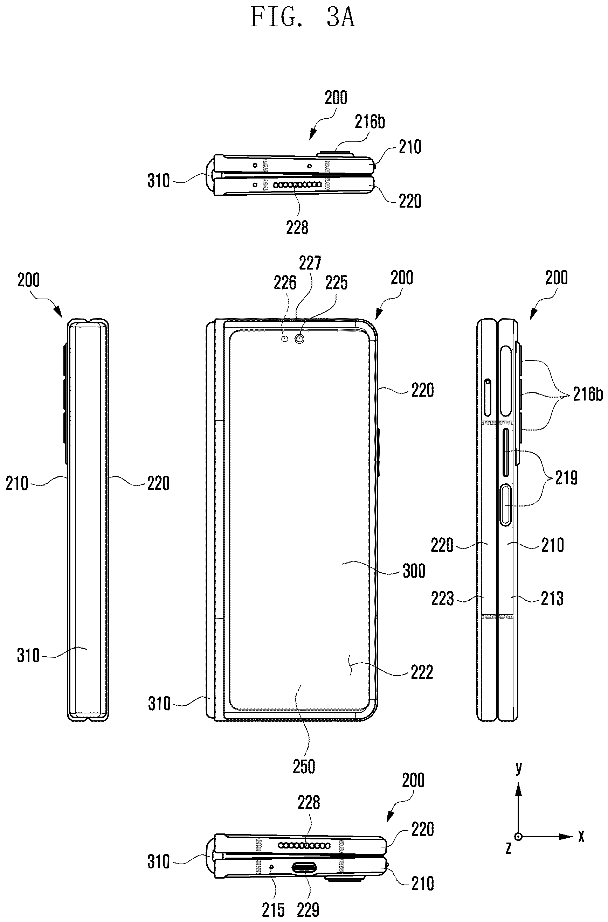

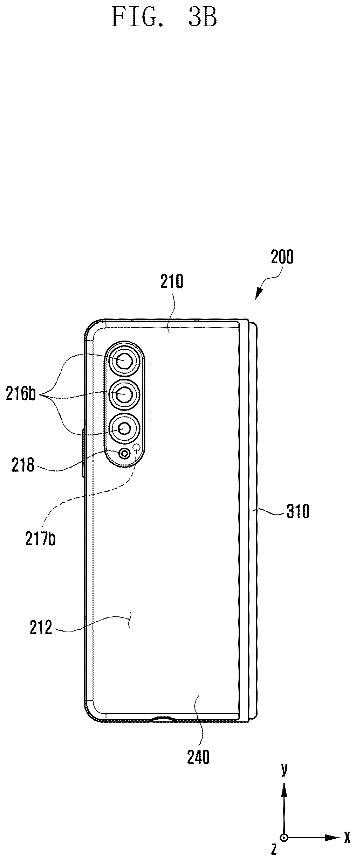

FIGS. 2A and 2B are front and rear views illustrating a foldable electronic device in an unfolded state according to various embodiments of the disclosure. FIGS. 3A and 3B are front and rear views illustrating a foldable electronic device in a folded state according to various embodiments of the disclosure.

According to various embodiments, the embodiments illustrated in FIG. 1 may be included in the embodiments illustrated in FIGS. 2A to 3B. For example, the foldable electronic device 200 illustrated in FIGS. 2A to 3B may include the processor 120, the memory 130, the input module 150, the acoustic output module 155, the display module 160, the audio module 170, the sensor module 176, the interface 177, the connector 178, the haptic module 179, the camera module 180, the antenna module 197, and/or the subscriber identification module 196 illustrated in FIG. 1.

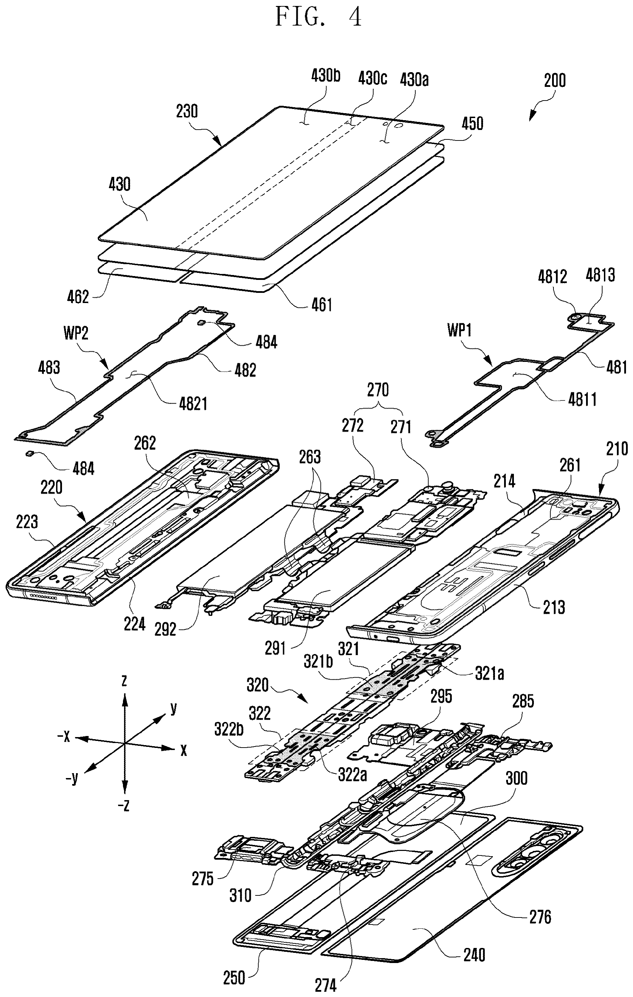

Referring to FIGS. 2A to 3B, the foldable electronic device 200 according to various embodiments of the disclosure may include a pair of housings 210 and 220 (e.g., a foldable housing structure) rotatably coupled about a folding axis A through a hinge device (e.g., the hinge module 320 of FIG. 4) (e.g., a hinge plate or a hinge assembly) to be foldable with respect to each other, a flexible display 230 (e.g., a first display, a foldable display, or a main display) disposed through the pair of housings 210 and 220, and/or a sub-display 300 (e.g., a second display) disposed through the second housing 220.

According to various embodiments, at least a portion of the hinge device (e.g., the hinge module 320 of FIG. 4) may be disposed to be invisible from the outside through the first housing 210 and the second housing 220. At least a portion of the hinge device (e.g., the hinge module 320 of FIG. 4) may be disposed to be invisible from the outside in an unfolded state through a hinge housing 310 (e.g., a hinge cover) covering a foldable portion. Herein, a surface on which the flexible display 230 is disposed may be defined as a front surface of the foldable electronic device 200, and a surface opposite to the front surface may be defined as a rear surface of the foldable electronic device 200. A surface surrounding a space between the front surface and the rear surface may be defined as a side surface of the foldable electronic device 200.

According to various embodiments, the pair of housings 210 and 220 may include a first housing 210 and a second housing 220 foldably disposed with respect to each other via a hinge device (e.g., the hinge module 320 of FIG. 4). The pair of housings 210 and 220 are not limited to the shapes and couplings illustrated in FIGS. 2A to 3B, and may be implemented by other shapes or combinations and/or couplings of components. The first housing 210 and the second housing 220 may be disposed on opposite sides of the folding axis A and may have a substantially symmetrical shape with respect to the folding axis A. According to various embodiments, the first housing 210 and the second housing 220 may be asymmetrically folded with respect to the folding axis A. The angle or distance between the first housing 210 and the second housing 220 may vary depending on whether the foldable electronic device 200 is in an unfolded state, a folded state, or an intermediate state.

According to various embodiments, in an unfolded state of the foldable electronic device 200, the first housing 210 may include a first surface 211 connected to at least a portion of the hinge device (e.g., the hinge module 320 of FIG. 4) and oriented toward a front surface of the foldable electronic device 200, a second surface 212 oriented in a direction opposite to the first surface 211, and/or a first side surface member 213 surrounding at least a portion of a first space between the first surface 211 and the second surface 212.

According to various embodiments, in the unfolded state of the foldable electronic device 200, the second housing 220 may include a third surface 221 connected to at least a portion of the hinge device (e.g., the hinge module 320 of FIG. 4) and oriented toward the front of the foldable electronic device 200, a fourth surface 222 oriented in a direction opposite to the third surface 221, and/or a second side surface member 223 surrounding at least a portion of a second space between the third surface 221 and the fourth surface 222.

According to various embodiments, in the unfolded state of the foldable electronic device 200, the first surface 211 may be oriented in substantially the same direction as the third surface 221, and in the folded state, may at least partially face the third surface 221.

According to various embodiments, the foldable electronic device 200 may further include a recess 201 formed to accommodate the flexible display 230 through structural coupling of the first housing 210 and the second housing 220. The recess 201 may have substantially the same size as the flexible display 230.

According to various embodiments, the hinge housing 310 (e.g., a hinge cover) may be disposed between the first housing 210 and the second housing 220. The hinge housing 310 may be disposed to cover at least a portion of the hinge device (e.g., the hinge module 320 of FIG. 4). The hinge housing 310 may be covered by at least a portion of the first housing 210 and the second housing 220 or exposed to the outside, depending on whether the foldable electronic device 200 is in the unfolded state, the folded state, or the intermediate state.

According to various embodiments, when the foldable electronic device 200 is in the unfolded state, at least a portion of the hinge housing 310 may be covered by the first housing 210 and the second housing 220 to be substantially unexposed. When the foldable electronic device 200 is in the folded state, at least a portion of the hinge housing 310 may be exposed to the outside between the first housing 210 and the second housing 220. When the first housing 210 and the second housing 220 are in the intermediate state folded with a certain angle, the hinge housing 310 may be at least partially exposed to the outside of the foldable electronic device 200 between the first housing 210 and the second housing 220. For example, the area of the hinge housing 310 exposed to the outside may be smaller than that in the case where the electronic device is fully folded. The hinge housing 310 may include a curved surface at least in part. The hinge housing 310 may be made of a conductive material (e.g., metal) and/or a non-conductive material (e.g., polymer).

According to various embodiments, when the foldable electronic device 200 is in the unfolded state (e.g., the state of FIGS. 2A and 2B), the first housing 210 and the second housing 220 may form an angle of about 180 degrees, and a first area 230a, a second area 230b, and a folding area 230c of the flexible display 230 may lie in the same plane and be arranged to be oriented in substantially the same direction (e.g., the z-axis direction). In various embodiments, when the foldable electronic device 200 is in the unfolded state, for example, in an out-folding type, the first housing 210 may rotate with respect to the second housing 220 at an angle of about 360 degrees such that the second surface 212 and the fourth surface 222 face each other in a reversely folded state.

According to various embodiments, when the foldable electronic device 200 is in the folded state (e.g., the state of FIGS. 3A and 3B), the first surface 211 of the first housing 210 and the third surface 221 of the second housing 220 may be arranged to face each other. In this case, the first area 230a and the second area 230b of the flexible display 230 may form a narrow angle (e.g., about 0 degrees to about 10 degrees) with each other through the folding area 230c and may be arranged to face each other.

According to various embodiments, at least a portion of the folding area 230c may be deformed into a curved shape having a predetermined curvature. When the foldable electronic device 200 is in the intermediate state, the first housing 210 and the second housing 220 may be arranged at a certain angle with respect to each other. In this case, the first area 230a and the second area 230b of the flexible display 230 may form an angle greater than that in the folded state and smaller than that in the unfolded state, and the curvature of the folding area 230c may be smaller than that in the folded state and greater than that in the unfolded state.

According to various embodiments, the first housing 210 and the second housing 220 may be configured, through the hinge device (e.g., the hinge module 320 of FIG. 4), to form an angle at a predetermined folding angle between the folded state and the unfolded state, at which the housings can be stopped (e.g., a free stop function). In various embodiments, the first housing 210 and the second housing 220 may be continuously operated, through the hinge device (e.g., the hinge module 320 of FIG. 4), in a direction of unfolding or in a direction of folding while being pressed based on a predetermined inflection angle.

According to various embodiments, the foldable electronic device 200 may include at least one of a display (e.g., a flexible display 230 or a sub-display 300) disposed in the first housing 210 and/or the second housing 220, an input module 215, a sound output module 227 or 228, a sensor module 217a, 217b, or 226, a camera module 216a, 216b, or 225, a key input device 219, an indicator (not illustrated), or a connector port 229. In various embodiments, at least one of the above-described components may be omitted from the foldable electronic device 200 or at least one other component may be additionally included.

According to various embodiments, the at least one display (e.g., the flexible display 230 or the sub-display 300) may include a flexible display 230 (e.g., a first display) disposed to be supported by the first surface 211 of the first housing 210 and the third surface 221 of the second housing 220 across a hinge device (e.g., the hinge module 320 of FIG. 4), and a sub-display 300 (e.g., a second display) disposed in an internal space of the second housing 220 to be at least partially visible from the outside through the fourth surface 222. In various embodiments, the sub-display 300 may be disposed in the inner space of the first housing 210 to be visible from the outside through the second surface 212. According to an embodiment, the flexible display 230 may be mainly used when the foldable electronic device 200 is in the unfolded state, and the sub-display 300 may be mainly used when the electronic device 200 is in the folded state. According to an embodiment, in the intermediate state, the foldable electronic device 200 may be controlled such that the flexible display 230 and/or the sub-display 300 may be used based on a folding angle of the first housing 210 and the second housing 220.

According to various embodiments, the flexible display 230 may be disposed in an accommodation space formed by the pair of housings 210 and 220. For example, the flexible display 230 may be disposed in a recess 201 formed by the pair of housings 210 and 220. When the foldable electronic device 200 is in the unfolded state, the flexible display 230 may be configured to be disposed over most of a front surface of the foldable electronic device 200. According to an embodiment, at least a portion of the flexible display 230 may be deformed into a flat or curved surface. The flexible display 230 may include a first area 230a facing the first housing 210, a second area 230b facing the second housing 220, and a folding area 230c connecting the first area 230a and the second area 230b and facing the hinge device (e.g., the hinge module 320 of FIG. 4). According to an embodiment, the division of areas of the flexible display 230 may be an exemplary physical division defined by the pair of housings 210 and 220 and the hinge device (e.g., the hinge module 320 of FIG. 4). The flexible display 230 may be displayed as a substantially seamless single full screen through the pair of housings 210 and 220 and the hinge device (e.g., the hinge module 320 of FIG. 4). The first area 230a and the second area 230b may have an overall symmetrical shape with respect to the folding area 230c or may have a partially asymmetrical shape.

According to various embodiments, the foldable electronic device 200 may include a first rear surface cover 240 disposed on the second surface 212 of the first housing 210 and a second rear surface cover 250 disposed on the fourth surface 222 of the second housing 220. In various embodiments, at least a portion of the first rear surface cover 240 may be integrally formed with the first side surface member 213. In various embodiments, at least a portion of the second rear surface cover 250 may be integrally formed with the second side surface member 223. According to an embodiment, at least one of the first rear surface cover 240 and the second rear surface cover 250 may be made of a substantially transparent plate (e.g., a glass plate including various coating layers, or a polymer plate) or an opaque plate.

According to various embodiments, the first rear surface cover 240 may be made of, for example, coated or colored glass, ceramic, polymer, metal (e.g., aluminum, stainless steel (STS), or magnesium), or an opaque plate such as a combination of two or more of these materials. The second rear surface cover 250 may be made of a substantially transparent plate of, for example, glass or polymer. In this case, the second display 300 may be disposed in an inner space of the second housing 220 to be visible from the outside through the second rear surface cover 250.

According to various embodiments, the input module 215 may include a microphone. In an embodiment, the input module 215 may include a plurality of microphones arranged to detect a direction of sound. The input module 215 may include the input module 150 illustrated in FIG. 1.

According to various embodiments, the sound output modules 227 and 228 may include speakers. According to an embodiment, the sound output modules 227 and 228 may include a call receiver 227 disposed through the fourth surface 222 of the second housing 220 and an external speaker 228 disposed through at least a portion of the second side surface member 223 of the second housing 220. In an embodiment, the input module 215, the sound output modules 227 and 228, and the connector port 229 may be disposed in spaces of the first housing 210 and/or the second housing 220, and may be exposed to an external environment through at least one hole formed in the first housing 210 and/or the second housing 220. In an embodiment, the holes formed in the first housing 210 and/or the second housing 220 may be shared for the input module 215 and the sound output modules 227 and 228. In an embodiment, the sound output modules 227 and 228 may include a speaker (e.g., a piezo speaker) that operates without a hole formed in the first housing 210 and/or the second housing 220. In an embodiment, the sound output modules 227 and 228 may include the sound output module 155 illustrated in FIG. 1.

According to various embodiments, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. According to an embodiment, the foldable electronic device 200 may include a flash 218 disposed near the second camera module 216b. The flash 218 may include, for example, a light-emitting diode or a xenon lamp. According to an embodiment, the camera modules 216a, 216b, and 225 may include one or more lenses, an image sensor, and/or an image signal processor. In an embodiment, at least one of the camera modules 216a, 216b, and 225 may include two or more lenses (e.g., a wide-angle lens and a telephoto lens) and image sensors, and may be disposed together on one surface of the first housing 210 and/or the second housing 220. For example, the camera modules 216a, 216b, and 225 may include the camera module 180 illustrated in FIG. 1.

According to various embodiments, the sensor modules 217a, 217b, and 226 may generate an electrical signal or a data value corresponding to an operation state inside the foldable electronic device 200 or an environmental state outside the foldable electronic device 200. In an embodiment, the sensor modules 217a, 217b, and 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In some embodiments, the sensor modules 217a, 217b, and 226 may include at least one of a gesture sensor, a grip sensor, a color sensor, an infrared (IR) sensor, an illumination sensor, an ultrasonic sensor, an iris recognition sensor, or a distance detection sensor (e.g., a time-of-flight (TOF) sensor or a light detection and ranging (LiDAR)). For example, the sensor modules 217a, 217b, and 226 may include the sensor module 176 illustrated in FIG. 1.

According to various embodiments, the foldable electronic device 200 may further include at least one sensor module (not illustrated), for example, a Hall sensor, a pressure sensor, a magnetic sensor, a bio-sensor, a temperature sensor, a humidity sensor, a proximity sensor, or a fingerprint recognition sensor. In some embodiments, the fingerprint recognition sensor may be disposed through at least one of the first side surface member 213 of the first housing 210 and the second side surface member 223 of the second housing 220.

According to various embodiments, the key input device 219 may be disposed to be exposed to the outside through the first side surface member 213 of the first housing 210. In an embodiment, the key input device 219 may be disposed to be exposed to the outside through the second side surface member 223 of the second housing 220. In an embodiment, in the foldable electronic device 200, some or all of the key input devices 219 may not be included, and a key input device 219, which is not included, may be implemented in another form, such as a soft key, on at least one of the displays 230 and 300. In various embodiments, the key input devices 219 may be implemented using pressure sensors included in the at least one display 230 or 300. In an embodiment, the key input devices 219 may include a power button and/or a volume control button of the foldable electronic device 200.

According to various embodiments, the connector port 229 may include a connector (e.g., a USB connector or an interface connector port module (IF module)) for transmitting and/or receiving power and/or data with an external electronic device (e.g., the external electronic devices 102, 104, and 108 of FIG. 1). In some embodiments, the connector ports 229 may be configured to perform a function for transmitting/receiving an audio signal to and from the external electronic device, or may further include a separate connector port (e.g., an ear jack hole) configured to perform an audio signal transmitting/receiving function. For example, the connector port 229 may include the connector terminal 178 illustrated in FIG. 1.

According to various embodiments, at least one camera module 216a or 225 among the camera modules 216a, 216b and 225, at least one sensor module 217a or 226 among the sensor modules 217a, 217b, and 226, and/or an indicator may be disposed to be exposed through at least one display 230 or 300. For example, the at least one camera module 216a or 225, at least one sensor module 217a or 226, and/or the indicator may be disposed in an inner space of at least one housing 210 or 220, below an active area (display area) of at least one display 230 or 300, and may be arranged to be in contact with an external environment through an opening perforated to a cover member (e.g., a window layer (not illustrated) of the flexible display 230 and/or the second rear surface cover 250) or a transparent area. According to an embodiment, an area in which the at least one display 230 or 300 and the at least one camera module 216a or 225 face each other may be provided as a transmissive area having a predetermined transmittance as a portion of a content display area. According to an embodiment, the transmissive area may have a transmittance ranging from about 5% to about 20%. The transmissive area may include an area overlapping the effective area (e.g., a field-of-view area) of the at least one camera module 216a or 225 through which light that is imaged by an image sensor to generate an image passes. For example, the transmissive area of the at least one display 230 or 300 may each include an area having a lower pixel density than the periphery. For example, the transmissive area may be provided in place of an opening. For example, the at least one camera module 216a or 225 may include an under-display camera (UDC) or an under-panel camera (UPC). In various embodiments, some camera modules or sensor modules 217a and 226 may be arranged to perform the functions thereof without being visually exposed through a display. For example, in an under display camera (UDC) structure, an area facing the camera module 216a or 225 and/or the sensor module 217a or 226, which is disposed under the at least one display 230 or 300 (e.g., a display panel), may not require a perforated opening.

FIG. 4 is a schematic exploded perspective view illustrating a foldable electronic device according to various embodiments of the disclosure.

According to an embodiment, the foldable electronic device 200 illustrated in FIG. 4 may include the embodiments of the foldable electronic device 200 illustrated in FIGS. 2A to 3B.

Referring to FIG. 4, the foldable electronic device 200 may include a flexible display 230 (e.g., a first display), a sub-display 300 (e.g., a second display), a hinge module 320, a pair of support members (e.g., a first support member 261 and a second support member 262), at least one substrate 270 (e.g., a printed circuit board (PCB)), a first housing 210, a second housing 220, a first rear surface cover 240, and/or a second rear surface cover 250.

According to various embodiments, the flexible display 230 may include a display panel 430 (e.g., a flexible display panel), a support plate 450 disposed under the display panel 430 (e.g., in the -z-axis direction), and a pair of metal plates 461 and 462 disposed under the support plate 450 (e.g., in the -z-axis direction).

According to various embodiments, the display panel 430 may include a first panel area 430a corresponding to a first area of the flexible display 230 (e.g., the first area 230a of FIG. 2A), a second panel area 430b extending from the first panel area 430a and corresponding to a second area of the flexible display 230 (e.g., the second area 230b of FIG. 2A), and a third panel area 430c connecting the first panel area 430a and the second panel area 430b and corresponding to a folding area of the flexible display 230 (e.g., the folding area 230c of FIG. 2A).

According to various embodiments, the support plate 450 may be disposed between the display panel 430 and the pair of support members 261 and 262, and may be formed to have a material and shape that provide a planar support structure for the first panel area 430a and the second panel area 430b, and a bendable structure for assisting in flexibility of the third panel area 430c. According to an embodiment, the support plate 450 may be formed of a conductive material (e.g., metal) or a non-conductive material (e.g., polymer or fiber reinforced plastics (FRP)). According to an embodiment, the pair of metal plates 461 and 462, which are disposed between the support plate 450 and the pair of support members 261 and 262, may include a first metal plate 461, which disposed to correspond to at least a portion of the first panel area 430a and the third panel area 430c, and a second metal plate 462 disposed to correspond to at least a portion of the second panel area 430b and the third panel area 430c. According to an embodiment, the pair of metal plates 461 and 462 may be formed of a metal material (e.g., SUS), thereby assisting in providing a ground connection structure and rigidity reinforcement for the flexible display 230.

According to various embodiments, the sub-display 300 (e.g., a second display) may be disposed in a space between the second housing 220 and the second rear surface cover 250. According to an embodiment, the sub-display 300 may be disposed in the space between the second housing 220 and the second rear surface cover 250 to be visible from the outside through substantially an entire area of the second rear surface cover 250.

According to various embodiments, at least a portion of the first support member 261 may be foldably coupled to the second support member 262 through the hinge module 320 (e.g., a hinge device, a hinge plate, or a hinge assembly). According to an embodiment, the foldable electronic device 200 may include at least one wiring member 263 (e.g., a flexible printed circuit board (FPCB)) extending from at least a portion of the first support member 261 to a portion of the second support member 262 across the hinge module 320. According to an embodiment, the first support member 261 may extend from or be disposed to be structurally coupled to the first side surface member 213. According to an embodiment, the foldable electronic device 200 may include a first space (e.g., the first space 2101 of FIG. 2A) provided through the first support member 261 and the first rear surface cover 240.

According to various embodiments, the hinge module 320 (e.g., a hinge device) may include a first hinge assembly 321 and/or a second hinge assembly 322. A first portion 321a of the first hinge assembly 321 may be coupled to at least a portion of the first support member 261 of the first housing 210 in the first direction (e.g., the y-axis direction) of the foldable electronic device 200. A second portion 321b of the first hinge assembly 321 may be coupled to at least a portion of the second support member 262 of the second housing 220 in the first direction (e.g., the y-axis direction) of the foldable electronic device 200. A first portion 322a of the second hinge assembly 322 may be coupled to at least a portion of the first support member 261 of the first housing 210 in the second direction (e.g., the -y-axis direction) of the foldable electronic device 200. A second portion 322b of the second hinge assembly 322 may be coupled to at least a portion of the second support member 262 of the second housing 220 in the second direction (e.g., the -y-axis direction) of the foldable electronic device 200.

According to various embodiments, the first housing 210 may be at least partially coupled to a first side (e.g., the x-axis direction) of the hinge module 320 (e.g., a hinge device). For example, the first housing 210 may be coupled, through the first support member 261, to at least a portion of the first portion 321a of the first hinge assembly 321 and the first portion 322a of the second hinge assembly 322 of the hinge module 320.

According to various embodiments, the second housing 220 may be at least partially coupled to a second side (e.g., the -x-axis direction) of the hinge module 320. For example, the second housing 220 may be coupled, through the second support member 262, to at least a portion of the second portion 321b of the first hinge assembly 321 and the second portion 322b of the second hinge assembly 322 of the hinge module 320.

According to various embodiments, the first housing 210 (e.g., a first housing structure) may be configured through coupling of the first side surface member 213, the first support member 261, and the first rear surface cover 240. According to an embodiment, the first support member 261 may extend from or be disposed to be structurally coupled to the first side surface member 213. According to an embodiment, the foldable electronic device 200 may include a first space (e.g., the first space 2101 of FIG. 2A) provided through the first support member 261 and the first rear surface cover 240.

According to various embodiments, the second housing 220 (e.g., a second housing structure) may be configured through coupling of the second side surface member 223, the second support member 262, and the second rear surface cover 250. According to an embodiment, the second support member 262 may extend from the second side surface member 223 or be disposed to be structurally coupled to the second side surface member 223. According to an embodiment, the foldable electronic device 200 may include a second space (e.g., the second space 2201 of FIG. 2A) provided through the second support member 262 and the second rear surface cover 250.

According to various embodiments, at least one wiring member 263 (e.g., an FPCB) and/or at least a portion of the hinge module 320 may be disposed to be supported through at least a portion of the pair of support members 261 and 262. According to an embodiment, at least one wiring member 263 may be disposed in a direction (e.g., the x-axis direction and the -x-axis direction) crossing the first support member 261 and the second support member 262. According to an embodiment, the at least one wiring member 263 may be disposed in a direction (e.g., the x-axis direction) substantially perpendicular to a folding axis (e.g., the y-axis or a folding axis A of FIG. 2A).

According to various embodiments, the at least one substrate 270 (e.g., a PCB) may include a first printed circuit board 271 disposed in the first space 2101 and a second printed circuit board 272 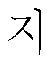 disposed in the second space 2201. According to an embodiment, the first substrate 271 and the second substrate 272 may include one or more electronic components disposed to implement various functions of the foldable electronic device 200. According to an embodiment, the first substrate 271 and the second substrate 272 may be electrically connected through the at least one wiring member 263 (e.g., an FPCB). In an embodiment, a camera module 282 (e.g., the camera modules 216a, 216b, and 225 of FIGS. 2A to 3B) may be disposed on the first substrate 271.

According to various embodiments, the foldable electronic device 200 may include one or more batteries 291 and 292. According to an embodiment, the one or more batteries 291 and 292 may include a first battery 291 disposed in the first space 2101 of the first housing 210 and electrically connected to the first substrate 271, and a second battery 292 disposed in the second space 2201 of the second housing 220 and electrically connected to the second substrate 272. According to an embodiment, the first support member 261 and the second support member 262 may further include one or more swelling holes for the first battery 291 and the second battery 292.

According to various embodiments, the first housing 210 may include a first rotation support surface 214. The second housing 220 may include a second rotation support surface 224 corresponding to the first rotation support surface 214. According to an embodiment, the first rotation support surface 214 and the second rotation support surface 224 may include outer surfaces corresponding to an outer surface of the hinge housing 310. According to an embodiment, when the foldable electronic device 200 is in the unfolded state, the first rotation support surface 214 and the second rotation support surface 224 may cover the hinge housing 310 to prevent the hinge housing 310 from being exposed to a rear surface of the foldable electronic device 200 or to expose only a portion of the hinge housing 310. According to an embodiment, when the foldable electronic device 200 is in the folded state, the first rotation support surface 214 and the second rotation support surface 224 may rotate along the outer surface of the hinge housing 310 to expose at least a portion of the hinge housing 310 to the rear surface of the foldable electronic device 200.

According to various embodiments, the foldable electronic device 200 may include at least one antenna 276 disposed in the first space (e.g., the first space 2101 of FIG. 2A). According to an embodiment, the at least one antenna 276 may be disposed between the first battery 291 and the first rear surface cover 240 in the first space 2101. According to an embodiment, the one or more antennas 276 may include, for example, a near field communication (NFC) antenna, a wireless charging antenna, and/or a magnetic secure transmission (MST) antenna. According to an embodiment, the at least one antenna 276 may perform, for example, near field communication with an external device or wireless transmission/reception of power required for charging. In some embodiments, an antenna structure may be formed by at least a portion of the first side surface member 213 or the second side surface member 223, and/or a portion of the first support member 261 and the second support member 262, or a combination thereof.

According to various embodiments, the foldable electronic device 200 may further include one or more electronic component assemblies 274 and 275 and/or additional support members 285 and 295 disposed in the first space 2101 and/or the second space 2201. For example, the one or more electronic component assemblies 274 and 275 may include an interface connector port assembly 274 and a speaker assembly 275.

According to various embodiments, the foldable electronic device 200 may include a first waterproof structure WP1 disposed between the first metal plate 461 and the first support member 261 and a second waterproof structure WP2 disposed between the second metal plate 462 and the second support member 262. According to an embodiment, the first waterproof structure WP1 may include a first waterproofing member 481 disposed between the first metal plate 461 and the first support member 261 so that one or more first waterproof spaces 4811, 4812, and 4813 are formed. According to an embodiment, the second waterproof structure WP2 may include a second waterproofing member 482, a third waterproofing member 483, and a fourth waterproofing member 484, which are disposed between the second metal plate 462 and the second support member 262 so as to form at least one second waterproof space 4821. According to an embodiment, the fourth waterproofing member 484 may be disposed to connect a spaced-apart area in a stepped manner with respect to the second waterproofing member 482 and the third waterproofing member 483.

According to various embodiments, at least one first waterproof space 4811 may be disposed, through the first waterproofing member 481, as a wiring structure for connecting an electronic component (e.g., a first digitizer) disposed between the first metal plate 461 and the first support member 261 to the first space 2101, so as to accommodate a penetration path of a cable member (e.g., an FPCB). According to an embodiment, at least one second waterproof space 4821 may be disposed, through the second waterproofing member 482, the third waterproofing member 483, and the fourth waterproofing member 484, as a wiring structure for connecting an electronic component (e.g., a second digitizer) disposed between the second metal plate 462 and the second support member 262 to the second space 2201, so as to accommodate a penetration path of a cable member (e.g., an FPCB). According to an embodiment, one or more first waterproof spaces 4812 and 4813 may accommodate an area corresponding to at least one electronic component (e.g., a camera module or a sensor module) supported by the first support member 261.

According to an embodiment of the disclosure, a foldable electronic device 200 may include one or more waterproof structures WP1 and WP2 in which one or more waterproofing members 481, 482, 483, and 484 are disposed between the first support member 261 of the first housing 210 and the first metal plate 461 and/or between the second support member 262 of the second housing 220 and the second metal plate 462, such that, when the flexible display 230 is separated from the pair of housings 210 and 220 for maintenance of the electronic device 200, damage to the flexible display 230 may be reduced through the one or more waterproofing members 481, 482, 483, and 484, and because the one or more waterproofing members 481, 482, 483, and 484 are disposed to avoid the rear surface of the flexible display 230, external visibility may be improved and surface quality may be ensured.

According to various embodiments, the foldable electronic device 200 disclosed below may include at least some of the embodiments illustrated in FIGS. 1 to 4. Embodiments related to the foldable electronic device 200 disclosed below may be integrated into and applied to the embodiments of the electronic device 101 of FIG. 1 and/or the foldable electronic device 200 of FIGS. 2A to 4. In the description of various embodiments of the disclosure disclosed below, the same reference numerals may be assigned to components that are substantially identical to those illustrated in FIGS. 1 to 4 described above, and redundant descriptions of their functions may be omitted.

According to an embodiment, although the various embodiments of the disclosure are described with respect to the foldable electronic device 200, the embodiments are not limited thereto and may be substantially equally applied to a bar-type electronic device, a multi-foldable electronic device, a rollable-type electronic device, or a sliding-type electronic device.

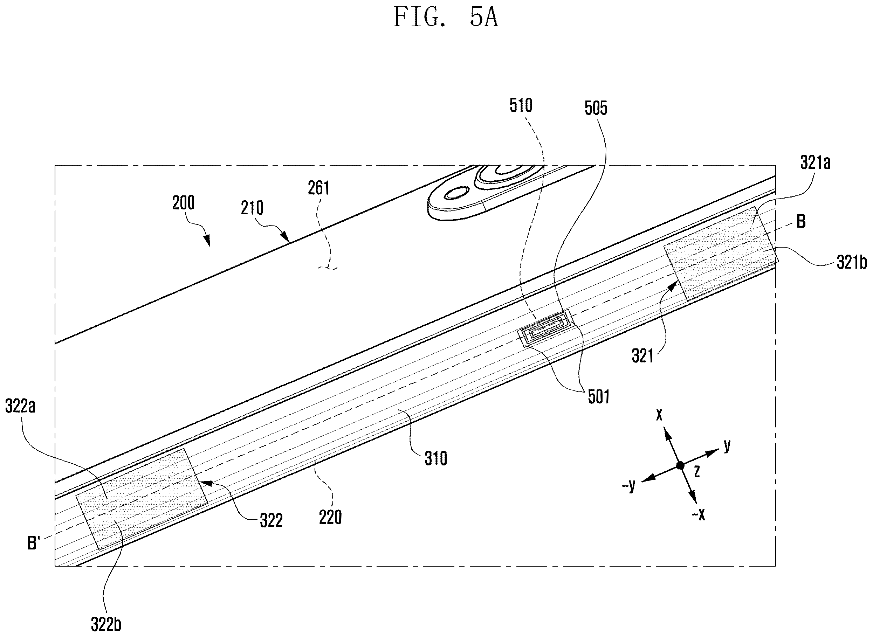

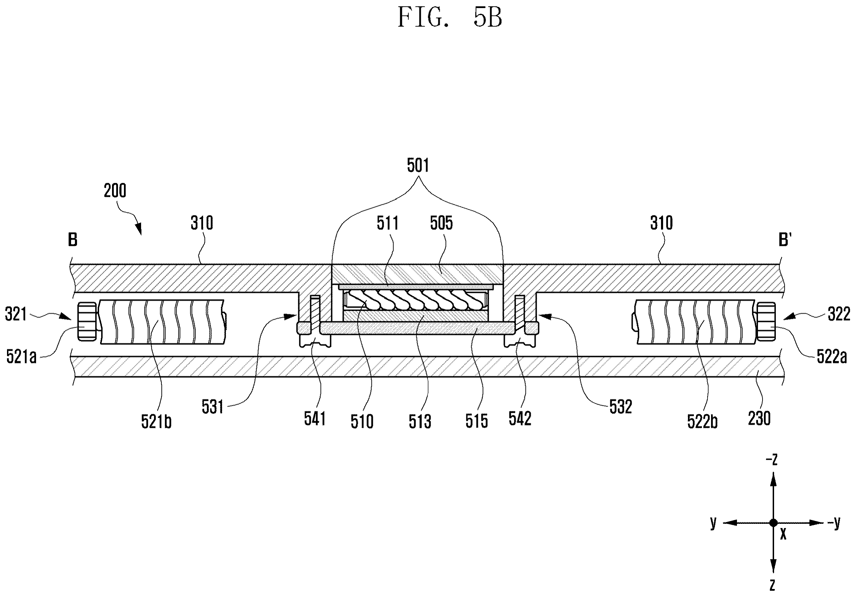

FIG. 5A is a view schematically illustrating a portion of a foldable electronic device in a folded state, as illustrated in FIGS. 3A and 3B, according to an embodiment of the disclosure. FIG. 5B is a cross-sectional view schematically illustrating the foldable electronic device of FIG. 5A according to an embodiment of the disclosure, taken along line B-B'.

Referring to FIGS. 5A and 5B, the foldable electronic device 200 may include a first housing 210, a second housing 220, a first hinge assembly 321 and a second hinge assembly 322 of a hinge module 320, a hinge housing 310, and/or a charging coil 510.

According to an embodiment, the first housing 210 may be at least partially coupled to a first side of the hinge module 320. For example, referring to FIGS. 4 and 5A, the first housing 210 may be coupled to the hinge module 320 by at least partially coupling the first support member 261 to a first portion 321a of the first hinge assembly 321 and a first portion 322a of the second hinge assembly 322.

According to an embodiment, the second housing 220 may be at least partially coupled to a second side of the hinge module 320. For example, referring to FIGS. 4 and 5A, the second housing 220 may be coupled to the hinge module 320 by coupling at least a portion of the second support member 262 to a second portion 321b of the first hinge assembly 321 and a second portion 322b of the second hinge assembly 322.

According to various embodiments, the first hinge assembly 321 and the second hinge assembly 322 may be arranged so that the first housing 210 and the second housing 220 are rotatable relative to each other. The first hinge assembly 321 and the second hinge assembly 322 may be disposed between the first housing 210 and the second housing 220.

According to an embodiment, the hinge housing 310 (e.g., a hinge cover) may be disposed between the first housing 210 and the second housing 220. The hinge housing 310 may be disposed to cover at least a portion of the first hinge assembly 321 and the second hinge assembly 322 of the hinge module 320. The hinge housing 310 may be covered by at least a portion of the first housing 210 and the second housing 220 or exposed to the outside, depending on whether the foldable electronic device 200 is in the unfolded state, the folded state, or the intermediate state. In an embodiment, when the foldable electronic device 200 is in the folded state, at least a portion of the hinge housing 310 may be exposed to the outside between the first housing 210 and the second housing 220. In an embodiment, when the foldable electronic device 200 is in the unfolded state, at least a portion of the hinge housing 310 may be covered by the first housing 210 and the second housing 220 so as not to be substantially exposed to the outside. The hinge housing 310 may include a conductive material (e.g., metal).

According to an embodiment, the hinge housing 310 may include a slot 501 (e.g., an opening) formed between the first hinge assembly 321 and the second hinge assembly 322. In an embodiment, the slot 501 may be formed adjacent to the first hinge assembly 321 rather than the second hinge assembly 322. In various embodiments, the slot 501 may be formed adjacent to the second hinge assembly 322 rather than the first hinge assembly 321.

According to an embodiment, a non-conductive plate 505 may be disposed in the slot 501. The non-conductive plate 505 may cover the slot 501. The non-conductive plate 505 may be attached to the slot 501. The non-conductive plate 505 may be sealed in the slot 501 so as to prevent foreign substances (e.g., dust and/or moisture) from entering the inside of the foldable electronic device 200 through the slot 501. The non-conductive plate 505 may include a polymer material.

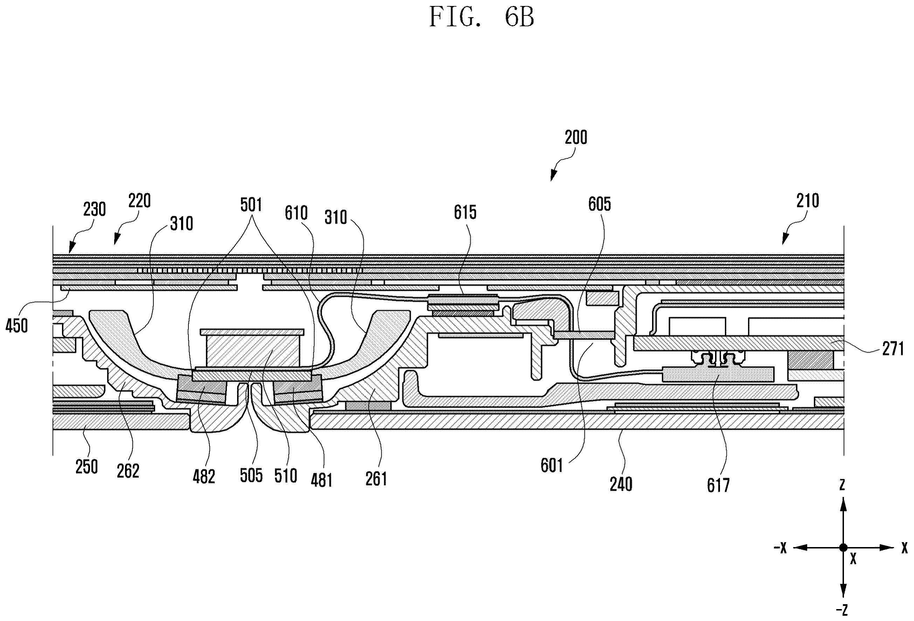

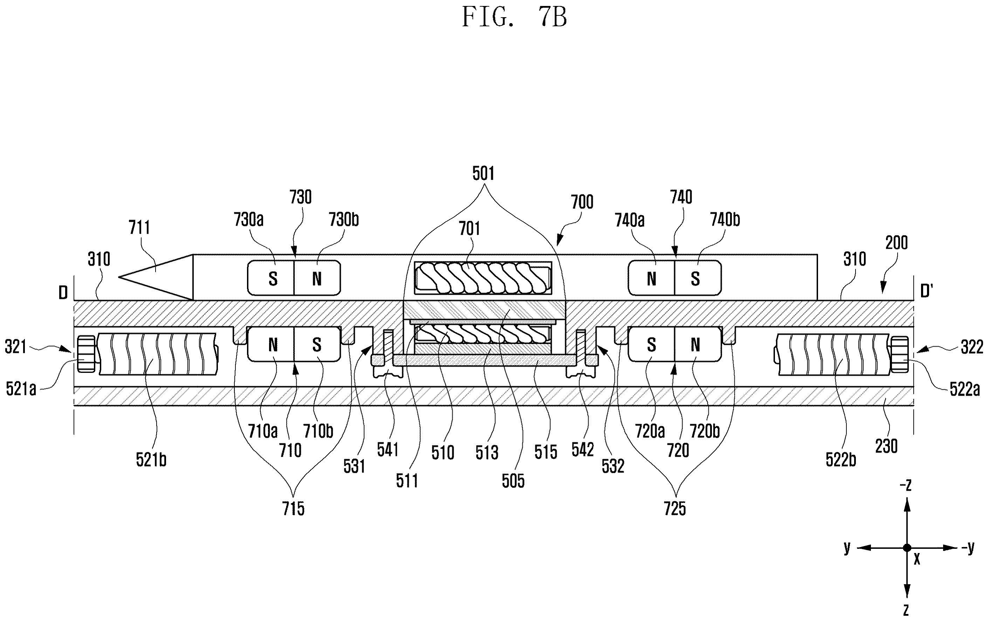

According to an embodiment, a charging coil 510 (e.g., a wireless charging coil) may be disposed inside the slot 501 and/or the non-conductive plate 505. The charging coil 510 may be disposed between the first hinge assembly 321 and the second hinge assembly 322 at a position corresponding to the slot 501 and/or the non-conductive plate 505. The charging coil 510 may generate a power field for wirelessly charging a stylus pen (e.g., the stylus pen 700 of FIG. 7B) disposed in an outward direction of the hinge housing 310 (e.g., the -z-axis direction in FIG. 5B) through the slot 501 and/or the non-conductive plate 505. The charging coil 510 may be integrally formed on an FPCB (e.g., the first FPCB 610 of FIG. 6B) or may be formed in a bar shape with a wire wound therearound.

Referring to FIG. 5B, the first hinge assembly 321 may include a first hinge gear 521a and a first spring 521b. The second hinge assembly 322 may include a second hinge gear 522a and a second spring 522b.

According to an embodiment, in the first direction (e.g., the y-axis direction) of the charging coil 510, a first coupling member 531 integrally connected to the hinge housing 310 may be disposed. In the second direction (e.g., the -y-axis direction) of the charging coil 510, a second coupling member 532 integrally connected to the hinge housing 310 may be disposed. A slot 501 (e.g., an opening) may be formed between the first coupling member 531 and the second coupling member 532.

According to an embodiment, the charging coil 510 may be disposed in the slot 501. On an upper side (e.g., in the -z-axis direction) of the charging coil 510, an adhesive sheet 511 (e.g., a double-sided tape) may be disposed. The charging coil 510 and the non-conductive plate 505 may be bonded to each other by the adhesive sheet 511.

According to an embodiment, a support member 513 may be disposed under the charging coil 510 (e.g., in the z-axis direction). The support member 513 may include an elastic member such as a double-sided tape or a sponge. A support frame 515 may be disposed under the support member 513 (e.g., in the z-axis direction). The support frame 515 may include a conductive material (e.g., metal). The support member 513 may be disposed between the charging coil 510 and the support frame 515 and may support the charging coil 510.

According to an embodiment, a portion of the support frame 515 (e.g., in the y-axis direction) may be coupled to the first coupling member 531 through a first screw 541. The first screw 541 may be inserted through a hole formed in the first coupling member 531. Another portion of the support frame 515 (e.g., in the -y-axis direction) may be coupled to the second coupling member 532 through a second screw 542. The second screw 542 may be inserted through a hole formed in the second coupling member 532.

According to various embodiments, the adhesive member 511 and/or the support member 513 may be omitted as long as the charging coil 510 can be stably disposed in the slot 501 formed between the first coupling member 531 and the second coupling member 532.

According to an embodiment, the support frame 515, the first coupling member 531, the second coupling member 532, and the hinge housing 310 may form a heat dissipation path. For example, heat generated during charging of a stylus pen (e.g., the stylus pen 700 of FIG. 7B) disposed on an outer surface of the hinge housing 310 by using the charging coil 510 may be dispersed and dissipated through the support frame 515, the first coupling member 531, the second coupling member 532, and the hinge housing 310.

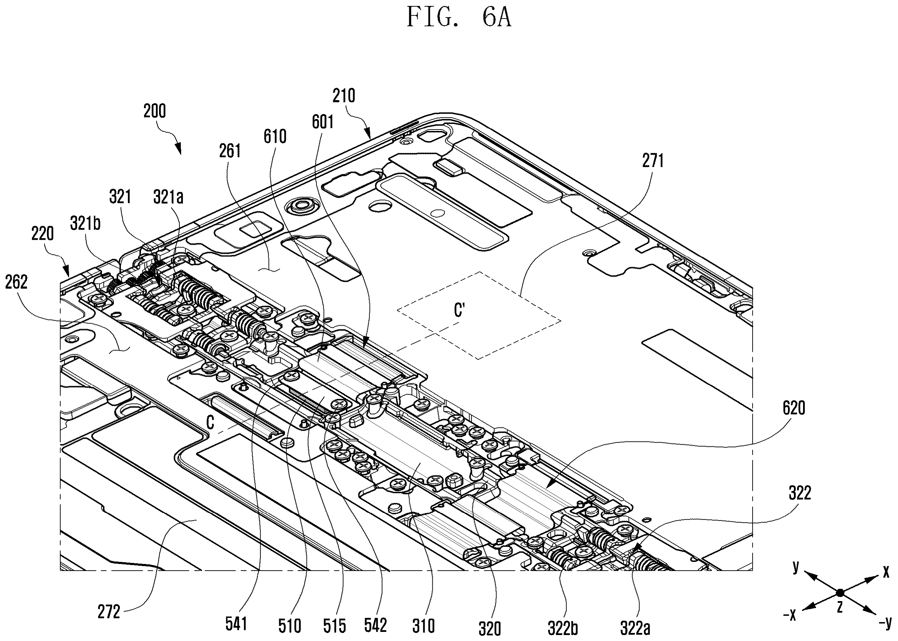

FIG. 6A is a view schematically illustrating a portion of a foldable electronic device in an unfolded state, according to an embodiment of the disclosure. FIG. 6B is a cross-sectional view schematically illustrating the foldable electronic device of FIG. 6A according to an embodiment of the disclosure, taken along line C-C'.

According to an embodiment, FIG. 6A may be a view schematically illustrating a portion of a configuration before the flexible display 230 is coupled in the foldable electronic device 200 of FIG. 2A according to various embodiments of the disclosure. In an embodiment, FIG. 6A may be a view schematically illustrating a portion of a configuration before the flexible display 230 is coupled in the foldable electronic device 200 in the unfolded state illustrated in FIG. 5A according to an embodiment of the disclosure. According to various embodiments, FIG. 6B may be a cross-sectional view schematically illustrating a cross-section of the foldable electronic device 600 of FIG. 6A after the flexible display 230 is coupled, taken along line C-C'. According to an embodiment, the embodiments illustrated in FIGS. 5A and 5B may be substantially equally applied to the foldable electronic device 200 illustrated in FIGS. 6A and 6B.

Referring to FIGS. 6A and 6B, the foldable electronic device 200 may include a first housing 210, a second housing 220, a first hinge assembly 321, a second hinge assembly 322, a hinge housing 310, a charging coil 510, a first FPCB 610, and/or a second FPCB 620.

According to an embodiment, the first housing 210 may be at least partially coupled to a first side of the hinge module 320. For example, referring to FIGS. 4 and 6A, the first housing 210 may be coupled to the hinge module 320 by coupling at least a portion of the first support member 261 to the first portion 321a of the first hinge assembly 321 and the first portion 322a of the second hinge assembly 322. The first housing 210 may include a first printed circuit board 271 (e.g., the first substrate 271 of FIG. 4).

According to an embodiment, the second housing 220 may be at least partially coupled to a second side of the hinge module 320. For example, referring to FIGS. 4 and 6A, the second housing 220 may be coupled to the hinge module 320 by coupling at least a portion of a second support member 262 to the second portion 321b of the first hinge assembly 321 and the second portion 322b of the second hinge assembly 322. The second housing 220 may include a second substrate 272 (e.g., the second substrate 272 of FIG. 4).

According to an embodiment, the hinge housing 310 may be disposed between the first housing 210 and the second housing 220. The hinge housing 310 may be disposed to cover at least a portion of the first hinge assembly 321 and the second hinge assembly 322 of the hinge module 320. The hinge housing 310 may be covered by at least a portion of the first housing 210 and the second housing 220 or exposed to the outside, depending on whether the foldable electronic device 200 is in the unfolded state, the folded state, or the intermediate state. In an embodiment, when the foldable electronic device 200 is in the folded state, at least a portion of the hinge housing 310 may be exposed to the outside between the first housing 210 and the second housing 220. In an embodiment, when the foldable electronic device 200 is in the unfolded state, at least a portion of the hinge housing 310 may be covered by the first housing 210 and the second housing 220 so as not to be substantially exposed to the outside. The hinge housing 310 may include a conductive material (e.g., metal).

According to an embodiment, the hinge housing 310 may include a slot 501 formed between the first hinge assembly 321 and the second hinge assembly 322. A non-conductive plate 505 may be disposed in the slot 501. The non-conductive plate 505 may cover the slot 501.

According to an embodiment, a charging coil 510 may be disposed at a position corresponding to the slot 501 and/or the non-conductive plate 505. The charging coil 510 may generate a power field to wirelessly charge a stylus pen (e.g., the stylus pen 700 of FIG. 7B) in an outward direction (e.g., the -z-axis direction of FIG. 6B) of the hinge housing 310 through the slot 501 and/or the non-conductive plate 505.

According to an embodiment, an opening 601 may be formed at a predetermined position of the first housing 210. A first FPCB 610 may be disposed in the opening 601. The first FPCB 610 may electrically connect the charging coil 510 and the first printed circuit board 271. The first FPCB 610 may transmit charging power and/or signals, which are transmitted through a power management module 188 and/or a processor (e.g., the processor 120 of FIG. 1) disposed on the first printed circuit board 271, to the charging coil 510.

According to an embodiment, the first FPCB 610 may be supported and fixed through a fixing member 615 disposed on the first housing 210 (e.g., the first support member 261). By fixing the first FPCB 610 to the first housing 210 through the fixing member 615, the first FPCB 610 may be stably disposed on the first housing 210 even when the foldable electronic device 200 repeatedly transitions between the folded state and the unfolded state. In an embodiment, by fixing the first FPCB 610 to the first housing 210 through the fixing member 615, even when the flexible display 230 and the support plate 450 are folded or unfolded in response to the folding and unfolding operations of the foldable electronic device 200, the first FPCB 610 and the support plate 450 of the flexible display 230 may not contact each other or be interfered with each other. A portion of the first FPCB 610 (e.g., in the x-axis direction) may be electrically connected to the first printed circuit board 271 through a connector 617. The first FPCB 610 may include an FPCB-type radio frequency (RF) cable (e.g., FRC).

According to an embodiment, a sealing member 605 may be disposed in the opening 601. The sealing member 605 may prevent foreign substances (e.g., dust and/or moisture) from entering through the opening 601.

According to an embodiment, a first waterproofing member 481 (e.g., the first waterproofing member 481 of FIG. 4) may be disposed on a portion (e.g., in the x-axis direction) of the first support member 261 of the first housing 210 and the hinge housing 310. A second waterproofing member 482 (e.g., the second waterproofing member 482 of FIG. 4) may be disposed on a portion (e.g., in the -x-axis direction) of the second support member 262 of the second housing 220 and the hinge housing 310.

According to an embodiment, the first rear surface cover 240 may be disposed on the second surface 212 (e.g., the second surface 212 of FIG. 2B) of the first housing 210. At least a portion of the first rear surface cover 240 may be integrally formed with the first side surface member 213 (e.g., the first side surface member 213 of FIG. 2A). The second rear surface cover 250 may be disposed on the fourth surface 222 (e.g., the fourth surface 222 of FIG. 2B) of the second housing 220. At least a portion of the second rear surface cover 250 may be integrally formed with the second side surface member 223 (e.g., the second side surface member 223 of FIG. 2A).

According to an embodiment, the second FPCB 620 (e.g., the wiring member 263 of FIG. 4) may be disposed from at least a portion (e.g., in the x-axis direction) of the first support member 261 of the first housing 210 to a portion (e.g., in the -x-axis direction) of the second support member 262 of the second housing 220 across the hinge module 320. The second FPCB 620 may be disposed in a direction extending across the first support member 261 and the second support member 262 (e.g., in the x-axis direction and the -x-axis direction). The second FPCB 620 may electrically connect the first printed circuit board 271 disposed in the first housing 210 and the second printed circuit board 272 disposed in the second housing 220.

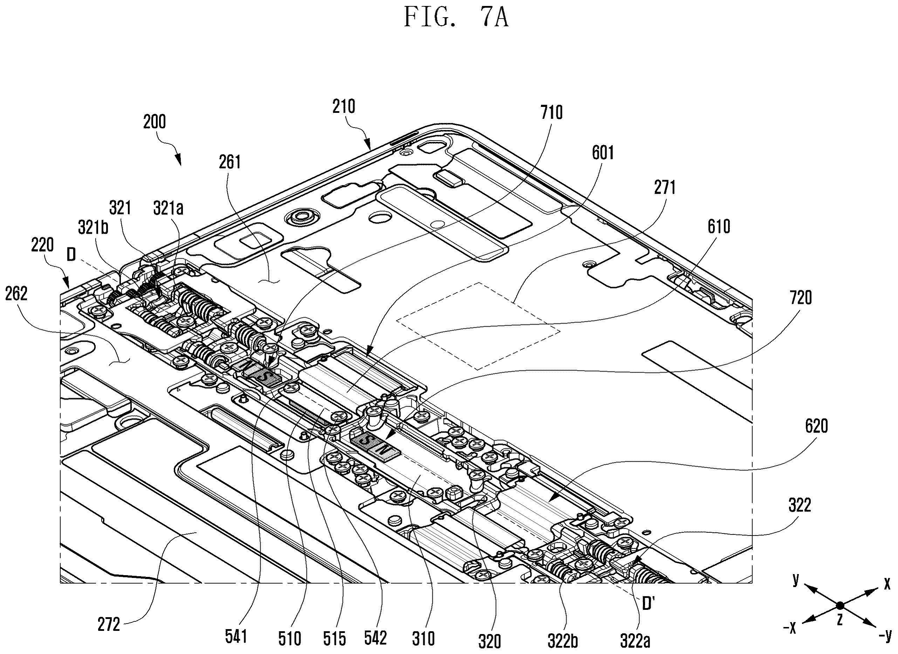

FIG. 7A is a view schematically illustrating a portion of a foldable electronic device including a charging coil and magnets in an unfolded state, according to an embodiment of the disclosure. FIG. 7B is a cross-sectional view schematically illustrating the foldable electronic device of FIG. 7A, according to an embodiment of the disclosure, taken along line D-D'.

According to an embodiment, the foldable electronic device 200 of FIGS. 7A and 7B may include the embodiments illustrated in FIGS. 5A to 6B. In the description of the foldable electronic device 200 illustrated in FIGS. 7A and 7B, the same reference numerals may be assigned to components that are substantially identical to the components illustrated in FIGS. 5A to 6B described above, and redundant descriptions of their functions may be omitted. In an embodiment, the foldable electronic device 200 of FIGS. 7A and 7B may further include a first magnet 710 and a second magnet 720 and may be in a state in which a stylus pen 700 is attached to the hinge housing 310, as compared with the foldable electronic device 200 illustrated in FIGS. 5A to 6B.

Referring to FIGS. 7A and 7B, the foldable electronic device 200 may include a first housing 210, a second housing 220, a first hinge assembly 321, a second hinge assembly 322, a hinge housing 310, a charging coil 510, a first magnet 710, a second magnet 720, and/or a stylus pen 700.

According to an embodiment, the first housing 210 may be at least partially coupled to a first side of the hinge module 320. For example, referring to FIGS. 4 and 7A, the first housing 210 may be coupled to the hinge module 320 by coupling at least a portion of the first support member 261 to the first portion 321a of the first hinge assembly 321 and the first portion 322a of the second hinge assembly 322. The first housing 210 may include a first printed circuit board 271 (e.g., the first substrate 271 of FIG. 4).

According to an embodiment, the second housing 220 may be at least partially coupled to a second side of the hinge module 320. For example, referring to FIGS. 4 and 6A, the second housing 220 may be coupled to the hinge module 320 by coupling at least a portion of a second support member 262 to the second portion 321b of the first hinge assembly 321 and the second portion 322b of the second hinge assembly 322. The second housing 220 may include a second printed circuit board 272 (e.g., the second substrate 272 of FIG. 4).

According to an embodiment, the hinge housing 310 may be disposed between the first housing 210 and the second housing 220. The hinge housing 310 may be disposed to cover at least a portion of the first hinge assembly 321 and the second hinge assembly 322 of the hinge module 320. The hinge housing 310 may be covered by at least a portion of the first housing 210 and the second housing 220 or exposed to the outside, depending on whether the foldable electronic device 200 is in the unfolded state, the folded state, or the intermediate state. In an embodiment, when the foldable electronic device 200 is in the folded state, at least a portion of the hinge housing 310 may be exposed to the outside between the first housing 210 and the second housing 220. In an embodiment, when the foldable electronic device 200 is in the unfolded state, at least a portion of the hinge housing 310 may be covered by the first housing 210 and the second housing 220 so as not to be substantially exposed to the outside. The hinge housing 310 may include a conductive material (e.g., metal).

According to an embodiment, the hinge housing 310 may include a slot 501 formed between the first hinge assembly 321 and the second hinge assembly 322. A non-conductive plate 505 may be disposed in the slot 501. The non-conductive plate 505 may cover the slot 501.

According to an embodiment, a charging coil 510 may be disposed at a position corresponding to the slot 501 and/or the non-conductive plate 505. The charging coil 510 may generate a power field for wirelessly charging the stylus pen 700 toward an outward direction of the hinge housing 310 (e.g., the -z-axis direction of FIG. 7B) through the slot 501 and/or the non-conductive plate 505. The stylus pen 700 may be detachably attached to the outward direction of the hinge housing 310 (e.g., the -z-axis direction of FIG. 7B).

According to an embodiment, the first hinge assembly 321 may include a first hinge gear 521a and a first spring 521b. The second hinge assembly 322 may include a second hinge gear 522a and a second spring 522b.

According to an embodiment, in the first direction (e.g., the y-axis direction) of the charging coil 510, a first coupling member 531 integrally connected to the hinge housing 310 may be disposed. In the second direction (e.g., the -y-axis direction) of the charging coil 510, a second coupling member 532 integrally connected to the hinge housing 310 may be disposed. A slot 501 (e.g., an opening) may be formed between the first coupling member 531 and the second coupling member 532.

According to an embodiment, the charging coil 510 may be disposed at a position corresponding to the slot 501. On an upper side (e.g., in the -z-axis direction) of the charging coil 510, an adhesive sheet 511 (e.g., a double-sided tape) may be disposed. The charging coil 510 and the non-conductive plate 505 may be bonded to each other by the adhesive sheet 511.

According to an embodiment, a support member 513 may be disposed under the charging coil 510 (e.g., in the z-axis direction). The support member 513 may include an elastic member such as a double-sided tape or a sponge. A support frame 515 may be disposed under the support member 513 (e.g., in the z-axis direction). The support frame 515 may include a conductive material (e.g., metal). The support member 513 may be disposed between the charging coil 510 and the support frame 515 and may support the charging coil 510.

According to an embodiment, a portion of the support frame 515 (e.g., in the y-axis direction) may be coupled to the first coupling member 531 through a first screw 541. The first screw 541 may be inserted through a hole formed in the first coupling member 531. A portion of the support frame 515 (e.g., in the -y-axis direction) may be coupled to the second coupling member 532 through a second screw 542. The second screw 542 may be inserted through a hole formed in the second coupling member 532.

According to various embodiments, the adhesive member 511 and/or the support member 513 may be omitted as long as the charging coil 510 can be stably disposed in the slot 501 formed between the first coupling member 531 and the second coupling member 532.

According to an embodiment, the support frame 515, the first coupling member 531, the second coupling member 532, and the hinge housing 310 may form a heat dissipation path. For example, heat generated during charging of a stylus pen (e.g., the stylus pen 700 of FIG. 7B) disposed on an outer surface of the hinge housing 310 by using the charging coil 510 may be dispersed and dissipated through the support frame 515, the first coupling member 531, the second coupling member 532, and the hinge housing 310.

According to an embodiment, the first magnet 710 may be disposed between the first hinge assembly 321 and the charging coil 510. The first magnet 710 may be disposed between the first hinge assembly 321 and the first coupling member 531. The first magnet 710 may be disposed inside a first accommodation member 715. The first magnet 710 may include an N pole 710a and an S pole 710b. The N pole 710a may be disposed in a first direction (e.g., the y-axis direction) facing the first hinge assembly 321, and the S pole 710b may be disposed in a second direction (e.g., the -y-axis direction) facing the charging coil 510 or the first coupling member 531.

According to an embodiment, the second magnet 720 may be disposed between the second hinge assembly 322 and the charging coil 510. The second magnet 720 may be disposed inside a second accommodation member 725. The second magnet 720 may be disposed between the second hinge assembly 322 and the second coupling member 532. The second magnet 720 may include an S pole 720a and an N pole 720b. The S pole 720a may be disposed in the first direction (e.g., the y-axis direction) facing the charging coil 510 or the second coupling member 532, and the N pole 720b may be disposed in the second direction (e.g., the -y-axis direction) facing the second hinge assembly 322.

According to an embodiment, the stylus pen 700 (e.g., an electronic pen) may be detachably attached to an outer surface (e.g., in the -z-axis direction) of the hinge housing 310 of the foldable electronic device 200. The stylus pen 700 may include a pen input portion 711, a wireless charging coil 701, a third magnet 730, and/or a fourth magnet 740.

According to an embodiment, the pen input portion 711 may input letters and/or drawings onto the flexible display 230 (e.g., a first display) and/or the sub-display 300 (e.g., a second display) by using an electromagnetic resonance (EMR) method, an electrically coupled resonance (ECR) method, or an active electrostatic (AES) method. For example, the pen input portion 711 may be disposed in the first direction (e.g., the y-axis direction).

According to an embodiment, the wireless charging coil 701 may be disposed at a position corresponding to the charging coil 510 of the foldable electronic device 200. The wireless charging coil 701 may be disposed above (e.g., in the -z-axis direction) the non-conductive plate 505. The wireless charging coil 701 may receive power transmitted through the charging coil 510 and charge a built-in battery (not illustrated). In an embodiment, the wireless charging coil 701 may be disposed between the third magnet 730 and the fourth magnet 740.

According to an embodiment, the third magnet 730 may be disposed at a position corresponding to the first magnet 710 of the foldable electronic device 200. The third magnet 730 may be disposed between the pen input portion 711 and the wireless charging coil 701. The third magnet 730 may be detachably attached in the first direction (e.g., the y-axis direction) of the hinge housing 310 through magnetic force of the first magnet 710. The third magnet 730 may include an S pole 730a and an N pole 730b. The S pole 730a may be disposed in the first direction (e.g., the y-axis direction) facing the pen input portion 711, and the N pole 730b may be disposed in a second direction (e.g., the -y-axis direction) facing the wireless charging coil 701. The S pole 730a and the N pole 730b of the third magnet 730 may be disposed so that their polarities are opposite to the N pole 710a and the S pole 710b of the first magnet 710 disposed at corresponding positions.

According to an embodiment, the fourth magnet 740 may be disposed at a position corresponding to the second magnet 720 of the foldable electronic device 200. The fourth magnet 740 may be disposed in the second direction (e.g., the -y-axis direction) of the wireless charging coil 701. The fourth magnet 740 may be detachably attached in the second direction (e.g., the -y-axis direction) of the hinge housing 310 through magnetic force of the second magnet 720. The fourth magnet 740 may include an N pole 740a and an S pole 740b. The N pole 740a may be disposed in the first direction (e.g., the y-axis direction) facing the wireless charging coil 701, and the S pole 740b may be disposed in the second direction (e.g., the -y-axis direction). The N pole 740a and the S pole 740b of the fourth magnet 740 may be disposed so that their polarities are opposite to the S pole 720a and the N pole 720b of the second magnet 720 disposed at corresponding positions.

According to an embodiment, the foldable electronic device 200 including the first magnet 710 and/or the second magnet 720 may detachably attach the stylus pen 700 including the third magnet 730 and/or the fourth magnet 740 to an outer surface of the hinge housing 310, and may transmit charging power to the wireless charging coil 701 of the stylus pen 700 by using the charging coil 510.

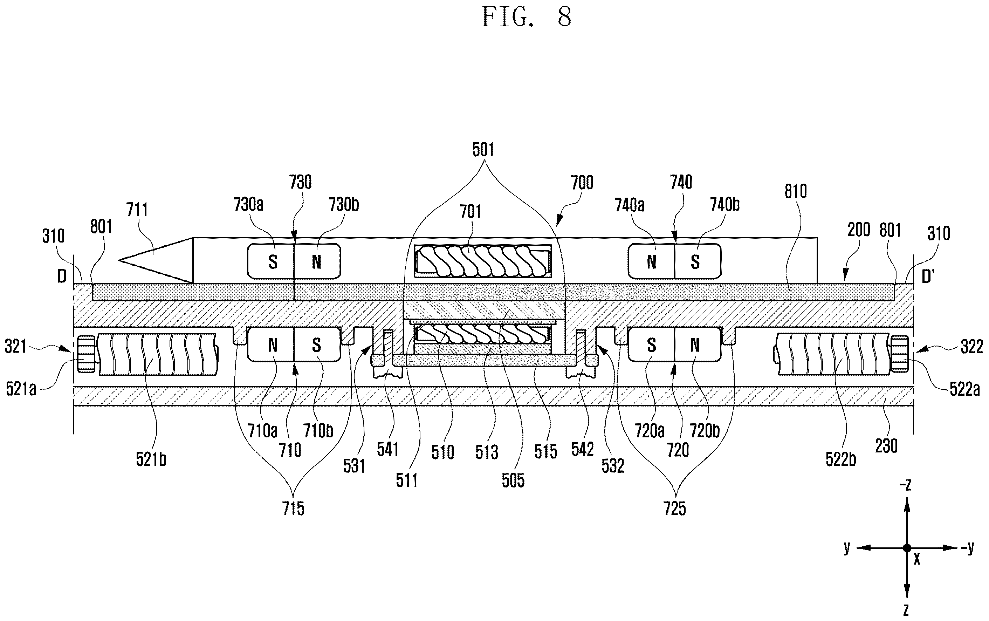

FIG. 8 is a cross-sectional view schematically illustrating a foldable electronic device including a charging coil and magnets, according to various embodiments of the disclosure. For example, FIG. 8 may illustrate various embodiments of the foldable electronic device illustrated in FIGS. 7A and 7B, according to an embodiment of the disclosure.

According to various embodiments, in the description of the foldable electronic device 200 illustrated in FIG. 8, the same reference numerals may be assigned to components that are substantially identical to the components illustrated in FIGS. 7A and 7B described above, and redundant descriptions of their functions may be omitted. In an embodiment, the foldable electronic device 200 of FIG. 8 may be in a state in which a non-conductive layer 810 is disposed in a recess 801 formed in the hinge housing 310, as compared with the foldable electronic device 200 illustrated in FIG. 7B.

Referring to FIG. 8, the foldable electronic device 200 may include a first housing 210, a second housing 220, a first hinge assembly 321, a second hinge assembly 322, a hinge housing 310, a charging coil 510, a first magnet 710, a second magnet 720, and/or a stylus pen 700.

According to an embodiment, the first housing 210 may be at least partially coupled to a first side of the hinge module 320. The second housing 220 may be coupled to at least a portion of a second side of the hinge module 320.

According to an embodiment, the hinge housing 310 may be disposed between the first housing 210 and the second housing 220. The hinge housing 310 may be disposed to cover at least a portion of the first hinge assembly 321 and the second hinge assembly 322 of the hinge module 320.

According to an embodiment, the hinge housing 310 may include a slot 501 formed between the first hinge assembly 321 and the second hinge assembly 322. A non-conductive plate 505 may be disposed in the slot 501. The non-conductive plate 505 may cover the slot 501.

According to an embodiment, a charging coil 510 may be disposed at a position corresponding to the slot 501 and/or the non-conductive plate 505. The charging coil 510 may generate a power field for wirelessly charging the stylus pen 700 toward an outward direction of the hinge housing 310 (e.g., the -z-axis direction of FIG. 8) through the slot 501 and/or the non-conductive plate 505. The stylus pen 700 may be detachably attached to the outward direction of the hinge housing 310 (e.g., the -z-axis direction of FIG. 8).

According to an embodiment, the hinge housing 310 may include a recess 801. The recess 801 may be formed on the outer surface (e.g., the -z-axis direction) of the hinge housing 310. A non-conductive layer 810 may be disposed in the recess 801. The non-conductive layer 810 may include polymer and/or glass. The non-conductive layer 810 may cover the slot 501. The non-conductive layer 810 may shield the slot 501. In various embodiments, when the non-conductive layer 810 is disposed in the recess 801 formed in the hinge housing 310, the non-conductive plate 505 may be removed.

According to an embodiment, the first hinge assembly 321 may include a first hinge gear 521a and a first spring 521b. The second hinge assembly 322 may include a second hinge gear 522a and a second spring 522b.

According to an embodiment, in the first direction (e.g., the y-axis direction) of the charging coil 510, a first coupling member 531 integrally connected to the hinge housing 310 may be disposed. In the second direction (e.g., the -y-axis direction) of the charging coil 510, a second coupling member 532 integrally connected to the hinge housing 310 may be disposed. A slot 501 (e.g., an opening) may be formed between the first coupling member 531 and the second coupling member 532.

According to an embodiment, the charging coil 510 may be disposed in the slot 501. On an upper side (e.g., in the -z-axis direction) of the charging coil 510, an adhesive sheet 511 (e.g., a double-sided tape) may be disposed. The charging coil 510 and the non-conductive plate 505 may be bonded to each other by the adhesive sheet 511. In various embodiments, when the non-conductive layer 810 is disposed in the recess 801 formed in the hinge housing 310 and the non-conductive plate 505 is removed, the adhesive sheet 511 may attach the charging coil 510 and the non-conductive layer 810.

According to an embodiment, a support member 513 may be disposed under the charging coil 510 (e.g., in the z-axis direction). A support frame 515 may be disposed under the support member 513 (e.g., in the z-axis direction).

According to an embodiment, a portion of the support frame 515 (e.g., in the y-axis direction) may be coupled to the first coupling member 531 through a first screw 541. A portion of the support frame 515 (e.g., in the -y-axis direction) may be coupled to the second coupling member 532 through a second screw 542.

According to an embodiment, the first magnet 710 may be disposed between the first hinge assembly 321 and the charging coil 510. The first magnet 710 may be disposed between the first hinge assembly 321 and the first coupling member 531. The first magnet 710 may be disposed inside a first accommodation member 715. The first magnet 710 may include an N pole 710a and an S pole 710b.

According to an embodiment, the second magnet 720 may be disposed between the second hinge assembly 322 and the charging coil 510. The second magnet 720 may be disposed inside a second accommodation member 725. The second magnet 720 may be disposed between the second hinge assembly 322 and the second coupling member 532. The second magnet 720 may include an S pole 720a and an N pole 720b.

According to an embodiment, the stylus pen 700 (e.g., an electronic pen) may be detachably attached to an outer surface (e.g., the -z-axis direction) of the hinge housing 310 of the foldable electronic device 200. The stylus pen 700 may include a pen input portion 711, a wireless charging coil 701, a third magnet 730, and/or a fourth magnet 740.

According to an embodiment, the pen input portion 711 may be disposed in the first direction (e.g., the y-axis direction).

According to an embodiment, the wireless charging coil 701 may be disposed at a position corresponding to the charging coil 510 of the foldable electronic device 200. The wireless charging coil 701 may be disposed above (e.g., in the -z-axis direction) the non-conductive layer 810. The wireless charging coil 701 may receive power transmitted through the charging coil 510. In an embodiment, the wireless charging coil 701 may be disposed between the third magnet 730 and the fourth magnet 740.

According to an embodiment, the third magnet 730 may be disposed at a position corresponding to the first magnet 710 of the foldable electronic device 200. The third magnet 730 may be disposed between the pen input portion 711 and the wireless charging coil 701. The third magnet 730 may be detachably attached in the first direction (e.g., the y-axis direction) of the hinge housing 310 through magnetic force of the first magnet 710. The third magnet 730 may include an S pole 730a and an N pole 730b. The S pole 730a and the N pole 730b of the third magnet 730 may be disposed so that their polarities are opposite to the N pole 710a and the S pole 710b of the first magnet 710 disposed at corresponding positions.

According to an embodiment, the fourth magnet 740 may be disposed at a position corresponding to the second magnet 720 of the foldable electronic device 200. The fourth magnet 740 may be disposed in the second direction (e.g., the -y-axis direction) of the wireless charging coil 701. The fourth magnet 740 may be detachably attached in the second direction (e.g., the -y-axis direction) of the hinge housing 310 through magnetic force of the second magnet 720. The fourth magnet 740 may include an N pole 740a and an S pole 740b. The N pole 740a and the S pole 740b of the fourth magnet 740 may be disposed so that their polarities are opposite to the S pole 720a and the N pole 720b of the second magnet 720 disposed at corresponding positions.

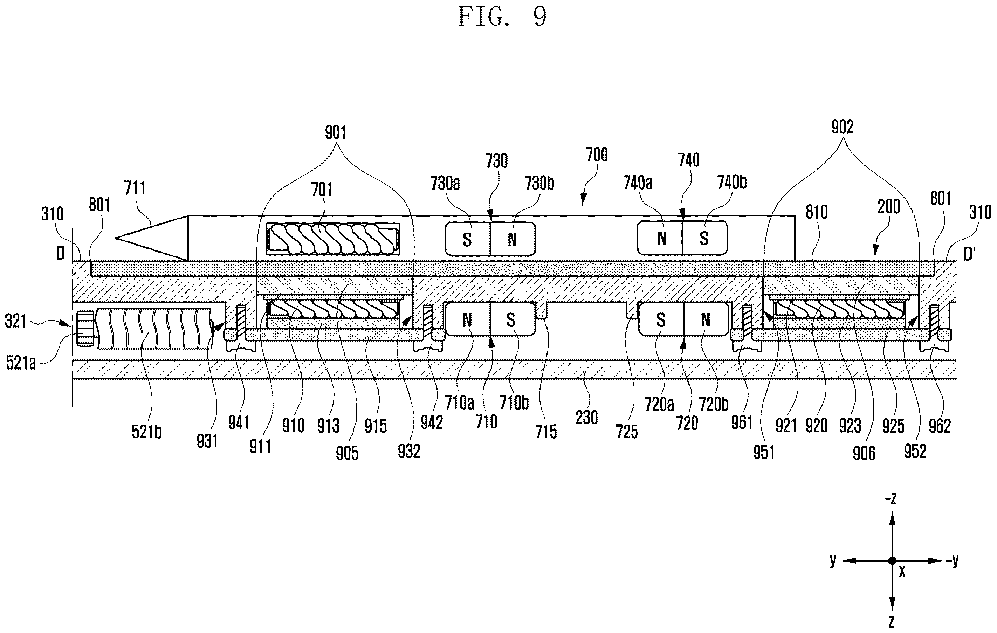

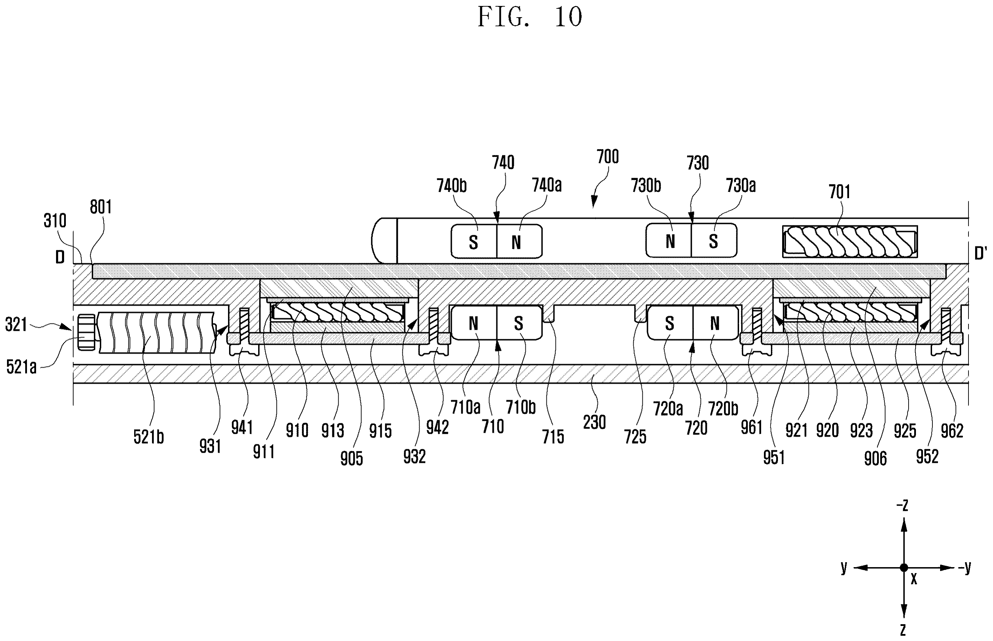

FIG. 9 is a cross-sectional view schematically illustrating a foldable electronic device including at least one charging coil and at least one magnet, according to various embodiments of the disclosure. FIG. 10 is a view illustrating an example in which a pen input portion of the stylus pen of FIG. 9 according to an embodiment of the disclosure is disposed in an opposite direction to the foldable electronic device. For example, FIGS. 9 and 10 may illustrate various embodiments of the foldable electronic device illustrated in FIGS. 5A to 8, according to various embodiments of the disclosure.

According to various embodiments, in the description of the foldable electronic device 200 illustrated in FIGS. 9 and 10, the same reference numerals may be assigned to components that are substantially identical to the components illustrated in FIGS. 5A to 8 described above, and redundant descriptions of their functions may be omitted.

Referring to FIG. 9, the foldable electronic device 200 may include a first housing 210, a second housing 220, a first hinge assembly 321, a second hinge assembly 322, a hinge housing 310, a first charging coil 910, a second charging coil 920, a first magnet 710, a second magnet 720, and/or a stylus pen 700.

According to an embodiment, the first housing 210 may be at least partially coupled to a first side of the hinge module 320. The second housing 220 may be coupled to at least a portion of a second side of the hinge module 320.

According to an embodiment, the hinge housing 310 may be disposed between the first housing 210 and the second housing 220. The hinge housing 310 may be disposed to cover at least a portion of the first hinge assembly 321 and the second hinge assembly 322 of the hinge module 320.

According to an embodiment, the hinge housing 310 may include a first slot 901 and a second slot 902 formed between the first hinge assembly 321 and the second hinge assembly 322. A first non-conductive plate 905 may be disposed in the first slot 901. The first non-conductive plate 905 may cover the first slot 901. A second non-conductive plate 906 may be disposed in the second slot 902. The second non-conductive plate 906 may cover the second slot 902.

According to an embodiment, a first charging coil 910 may be disposed at a position corresponding to the first slot 901 and/or the first non-conductive plate 905. The first charging coil 910 may generate a power field for wirelessly charging the stylus pen 700 toward an outward direction of the hinge housing 310 (e.g., the -z-axis direction of FIG. 9) through the first slot 901 and/or the first non-conductive plate 905.

According to an embodiment, a second charging coil 920 may be disposed at a position corresponding to the second slot 902 and/or the second non-conductive plate 906. The second charging coil 920 may generate a power field for wirelessly charging the stylus pen 700 toward an outward direction of the hinge housing 310 (e.g., the -z-axis direction of FIG. 9) through the second slot 902 and/or the second non-conductive plate 906.

According to an embodiment, the hinge housing 310 may include a recess 801. The recess 801 may be formed on the outer surface (e.g., the -z-axis direction) of the hinge housing 310. A non-conductive layer 810 may be disposed in the recess 801. The non-conductive layer 810 may include polymer and/or glass. The non-conductive layer 810 may cover the first slot 901 and the second slot 902. The non-conductive layer 810 may shield the first slot 901 and the second slot 902. In various embodiments, when the non-conductive layer 810 is disposed in the recess 801 formed in the hinge housing 310, the first non-conductive plate 905 and/or the second non-conductive plate 906 may be removed.

According to an embodiment, the first hinge assembly 321 may include a first hinge gear 521a and a first spring 521b. The second hinge assembly 322 may include a second hinge gear 522a and a second spring 522b. Although the second hinge assembly 322 is not illustrated in FIG. 9, it will be readily understood by those ordinarily skilled in the art, with reference to FIGS. 5A to 8 described above, that the second hinge assembly 322 is disposed in the second direction (e.g., the -y-axis direction) of the foldable electronic device 900.

According to an embodiment, in the first direction (e.g., the y-axis direction) of the first charging coil 910, a first coupling member 931 (e.g., the first coupling member 531 of FIG. 8) integrally connected to the hinge housing 310 may be disposed. In the second direction (e.g., the -y-axis direction) of the first charging coil 910, a second coupling member 932 (e.g., the second coupling member 532 of FIG. 8) integrally connected to the hinge housing 310 may be disposed. A first slot 901 (e.g., an opening) may be formed between the first coupling member 931 and the second coupling member 932.

According to an embodiment, the first charging coil 910 may be disposed in the first slot 901. On an upper side (e.g., the -z-axis direction) of the first charging coil 910, a first adhesive sheet 911 (e.g., double-sided tape) may be disposed. The first charging coil 910 and the first non-conductive plate 905 may be attached to each other through the first adhesive sheet 911. In various embodiments, when the non-conductive layer 810 is disposed in the recess 801 formed in the hinge housing 310 and the first non-conductive plate 905 is removed, the first adhesive sheet 911 may attach the first charging coil 910 and the non-conductive layer 810.

According to an embodiment, a first support member 913 may be disposed under the first charging coil 910 (e.g., in the z-axis direction). A first support frame 915 may be disposed under the first support member 913 (e.g., in the z-axis direction).

According to an embodiment, a portion of the first support frame 915 (e.g., in the y-axis direction) may be coupled to the first coupling member 931 through a first screw 941. A portion of the first support frame 915 (e.g., in the -y-axis direction) may be coupled to the second coupling member 932 through a second screw 942.

According to an embodiment, in the first direction (e.g., the y-axis direction) of the second charging coil 920, a third coupling member 951 integrally connected to the hinge housing 310 may be disposed. In the second direction (e.g., the -y-axis direction) of the second charging coil 920, a fourth coupling member 952 integrally connected to the hinge housing 310 may be disposed. A second slot 902 (e.g., an opening) may be formed between the third coupling member 951 and the fourth coupling member 952.

According to an embodiment, the second charging coil 920 may be disposed in the second slot 902. On an upper side (e.g., the -z-axis direction) of the second charging coil 920, a second adhesive sheet 921 (e.g., double-sided tape) may be disposed. The second charging coil 920 and the second non-conductive plate 906 may be attached to each other through the second adhesive sheet 921. In various embodiments, when the non-conductive layer 810 is disposed in the recess 801 formed in the hinge housing 310 and the second non-conductive plate 906 is removed, the second adhesive sheet 921 may attach the second charging coil 920 and the non-conductive layer 810.

According to an embodiment, a second support member 923 may be disposed under the second charging coil 920 (e.g., in the z-axis direction). A second support frame 925 may be disposed under the second support member 923 (e.g., in the z-axis direction).

According to an embodiment, a portion of the second support frame 925 (e.g., in the y-axis direction) may be coupled to the third coupling member 951 through a third screw 961. A portion of the second support frame 925 (e.g., in the -y-axis direction) may be coupled to the fourth coupling member 952 through a fourth screw 962.

According to an embodiment, the first support frame 915, the first coupling member 931, the second coupling member 932, the second support frame 925, the third coupling member 951, the fourth coupling member 952, and the hinge housing 310 may form a heat dissipation path. For example, heat generated during charging of the stylus pen 700 disposed on the outer surface of the hinge housing 310 using the first charging coil 910 and/or the second charging coil 920 may be dispersed and dissipated through the first support frame 915, the first coupling member 931, the second coupling member 932, the second support frame 925, the third coupling member 951, the fourth coupling member 952, and the hinge housing 310.

According to an embodiment, the first magnet 710 and the second magnet 720 may be disposed between the first charging coil 910 and the second charging coil 920. For example, the first magnet 710 may be disposed between the first charging coil 910 and the second magnet 720. For example, the second magnet 720 may be disposed between the first magnet 710 and the second charging coil 920.

According to an embodiment, the first magnet 710 may be disposed inside a first accommodation member 715. For example, the first magnet 710 may be disposed between the second coupling member 932 and the first accommodation member 715. For example, the second magnet 720 may be disposed between the second accommodation member 725 and the third coupling member 951.

According to an embodiment, the first magnet 710 may include an N pole 710a and an S pole 710b. The second magnet 720 may include an S pole 720a and an N pole 720b.

According to an embodiment, the stylus pen 700 (e.g., an electronic pen) may be detachably attached to an outer surface (e.g., in the -z-axis direction) of the hinge housing 310 of the foldable electronic device 200. The stylus pen 700 may include a pen input portion 711, a wireless charging coil 701, a third magnet 730, and/or a fourth magnet 740.

According to an embodiment, the pen input portion 711 may be disposed in the first direction (e.g., the y-axis direction).

According to an embodiment, the wireless charging coil 701 may be disposed at a position corresponding to the first charging coil 910 of the foldable electronic device 200. The wireless charging coil 701 may be disposed above (e.g., in the -z-axis direction) the non-conductive layer 810. The wireless charging coil 701 may receive power transmitted through the first charging coil 910.

According to an embodiment, the third magnet 730 may be disposed at a position corresponding to the first magnet 710 of the foldable electronic device 200. The wireless charging coil 701 may be disposed between the pen input portion 711 and the third magnet 730. The third magnet 730 may be detachably attached in the first direction (e.g., the y-axis direction) of the hinge housing 310 through magnetic force of the first magnet 710. The third magnet 730 may include an S pole 730a and an N pole 730b. The S pole 730a and the N pole 730b of the third magnet 730 may be disposed so that their polarities are opposite to the N pole 710a and the S pole 710b of the first magnet 710 disposed at corresponding positions.

According to an embodiment, the fourth magnet 740 may be disposed at a position corresponding to the second magnet 720 of the foldable electronic device 200. The fourth magnet 740 may be disposed in the second direction (e.g., the -y-axis direction) of the stylus pen 700. The fourth magnet 740 may be detachably attached in the second direction (e.g., the -y-axis direction) of the hinge housing 310 through magnetic force of the second magnet 720. The fourth magnet 740 may include an N pole 740a and an S pole 740b. The N pole 740a and the S pole 740b of the fourth magnet 740 may be disposed so that their polarities are opposite to the S pole 720a and the N pole 720b of the second magnet 720 disposed at corresponding positions.

Referring to FIG. 10, the stylus pen 700 may have a pen input portion 711 disposed in an opposite direction compared to the embodiment illustrated in FIG. 9. For example, the pen input portion 711 of the stylus pen 700 illustrated in FIG. 10 may be disposed to be oriented in the second direction (e.g., in the -y-axis direction).

In the embodiment illustrated in FIG. 10, the wireless charging coil 701 may be disposed at a position corresponding to the second charging coil 920 of the foldable electronic device 200. The wireless charging coil 701 may receive power delivered through the second charging coil 920.

Referring to FIG. 10, the third magnet 730 may be disposed at a position corresponding to the second magnet 720 of the foldable electronic device 200. The third magnet 730 may be detachably attached, through magnetic force of the second magnet 720, to the hinge housing 310 in the second direction (e.g., in the -y-axis direction). The third magnet 730 may include an N pole 730b and an S pole 730a. The N pole 730b and the S pole 730a of the third magnet 730 may have polarities opposite to those of the S pole 720b and the N pole 720a of the second magnet 720 disposed at corresponding positions.

Referring to FIG. 10, the fourth magnet 740 may be disposed at a position corresponding to the first magnet 710 of the foldable electronic device 200. The fourth magnet 740 may be detachably attached, through magnetic force of the first magnet 710, to the hinge housing 310 in the first direction (e.g., in the y-axis direction). The fourth magnet 740 may include an S pole 740b and an N pole 740a. The S pole 740b and the N pole 740a of the fourth magnet 740 may have polarities opposite to those of the N pole 710b and the S pole 710a of the first magnet 710 disposed at corresponding positions.

According to an embodiment, even when the pen input portion 711 of the stylus pen 700 is positioned in the first direction (e.g., in the y-axis direction) or in the second direction (e.g., in the -y-axis direction) opposite to the first direction, the stylus pen 700 may be detachably attached to the hinge housing 310 of the foldable electronic device 200 by using the first magnet 710, the second magnet 720, the third magnet 730, and/or the fourth magnet 740.

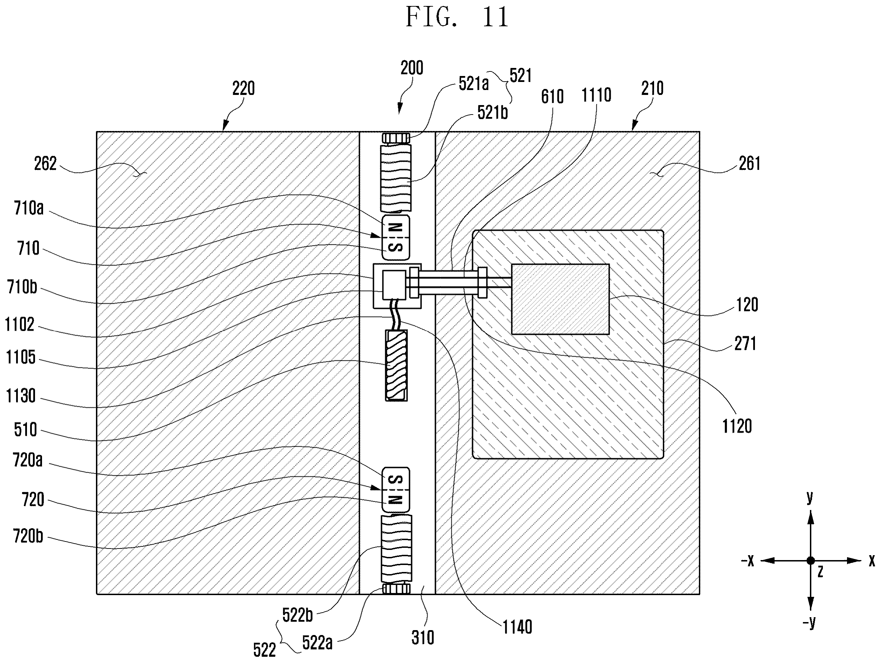

FIG. 11 is a view schematically illustrating a portion of a foldable electronic device including a first printed circuit board and a third printed circuit board in an unfolded state, according to an embodiment of the disclosure.

According to an embodiment, the embodiment illustrated in FIG. 11 may be integrated and applied to the embodiments illustrated in FIGS. 5A to 10. In the description of the foldable electronic device 200 illustrated in FIG. 11, the same reference numerals may be assigned to components that are substantially identical to the components illustrated in FIGS. 5A to 10 described above, and redundant descriptions of their functions may be omitted.

Referring to FIG. 11, the first housing 210 may include a first printed circuit board 271 (e.g., the first substrate 271 of FIG. 4). The first printed circuit board 271 may include a processor 120 (e.g., the processor 120 of FIG. 1). The processor 120 may control overall operations of the foldable electronic device 200 and signal flow among internal components, and may perform data processing functions.

According to an embodiment, the processor 120 may be electrically connected to a third printed circuit board 1102 disposed inside the hinge housing 310 through an FPCB (e.g., the first FPCB 610 of FIG. 6B). The third printed circuit board 1102 may include a wireless charging processor 1105. According to various embodiments, the processor 120 may be electrically connected to the wireless charging processor 1105 through a first wireless charging control signal line 1110 and a first wireless charging power signal line 1120. The processor 120 may transmit power and control signals to the wireless charging coil 701 of the stylus pen 700 through the charging coil 510.

According to various embodiments, the wireless charging processor 1105 may be electrically connected to the charging coil 510 through a second wireless charging power signal line 1130 and a second wireless charging control signal line 1140. The wireless charging processor 1105 may transmit power and control signals to the wireless charging coil 701 of the stylus pen 700 through the charging coil 510.

Referring to FIG. 11, in the foldable electronic device 200, the third printed circuit board 1102 may be disposed inside the hinge housing 310 disposed between the first housing 210 and the second housing 220, and the wireless charging processor 1105 configured to control the charging coil 510 may be disposed on the third printed circuit board 1102. In an embodiment, when the charging coil 510 is a solenoid-type coil, the charging efficiency of the charging coil 510 may be improved by configuring the length of the connecting wire to be short.

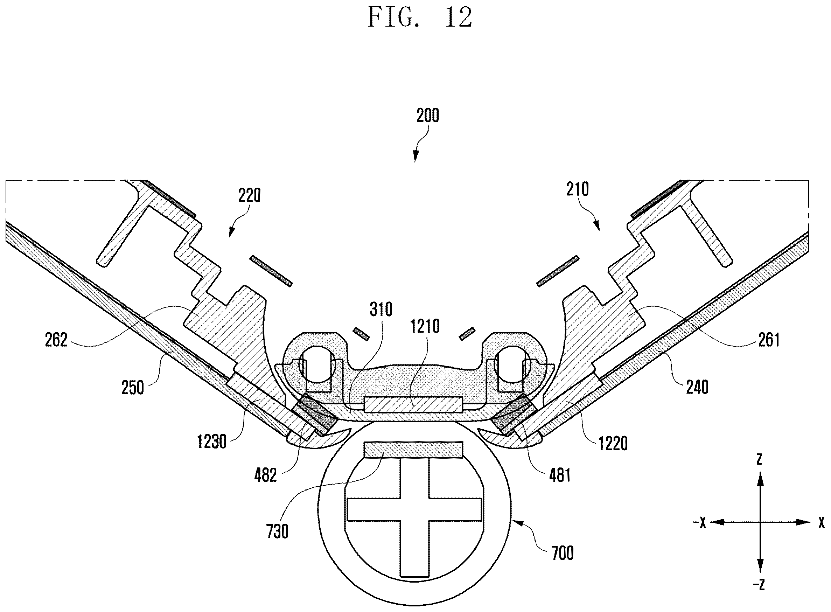

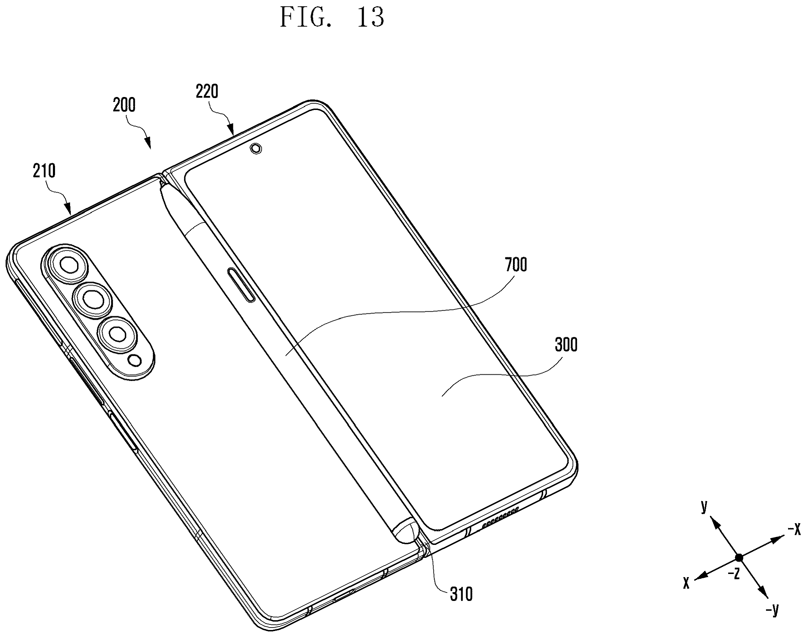

FIG. 12 is a cross-sectional view schematically illustrating a foldable electronic device including at least one magnet, according to an embodiment of the disclosure. FIG. 13 is a view schematically illustrating an example in which a stylus pen is attached to a hinge housing while the foldable electronic device including at least one magnet is in an unfolded state, according to an embodiment of the disclosure.

Referring to FIG. 12, the foldable electronic device 200 may include a first magnet 1210, a second magnet 1220, and/or a third magnet 1230.

According to an embodiment, the first magnet 1210 may be disposed inside a hinge housing 310 (e.g., in the z-axis direction). The first magnet 1210 may include, for example, the first magnet 710 or the second magnet 720 illustrated in FIG. 7B.

According to an embodiment, the second magnet 1220 may be disposed between the first support member 261 and the first rear surface cover 240 of the first housing 210.

According to an embodiment, the third magnet 1230 may be disposed between the second support member 262 and the second rear surface cover 240 of the second housing 220.

According to an embodiment, the first magnet 1210, the second magnet 1220, and/or the third magnet 1230 disposed in the foldable electronic device 200 may be coupled by magnetic force to the magnet 730 disposed in the stylus pen 700.

According to an embodiment, a portion of the first housing 210 of the foldable electronic device 200 (e.g., in the -x-axis direction) and a portion of the second housing 220 (e.g., in the x-axis direction) may be formed at an angle lower than the outer curvature of the stylus pen 700 at a point where the stylus pen 700 is positioned.

Referring to FIG. 13, since the foldable electronic device 200 includes the first magnet 1210, the second magnet 1220, and/or the third magnet 1230, and the portion of the first housing 210 (e.g., in the -x-axis direction) and the portion of the second housing 220 (e.g., in the x-axis direction) are formed at an angle lower than the outer curvature of the stylus pen 700, the stylus pen 700 may be stably attached to the hinge housing 310 without being separated therefrom even when the foldable electronic device 200 is in the unfolded state.

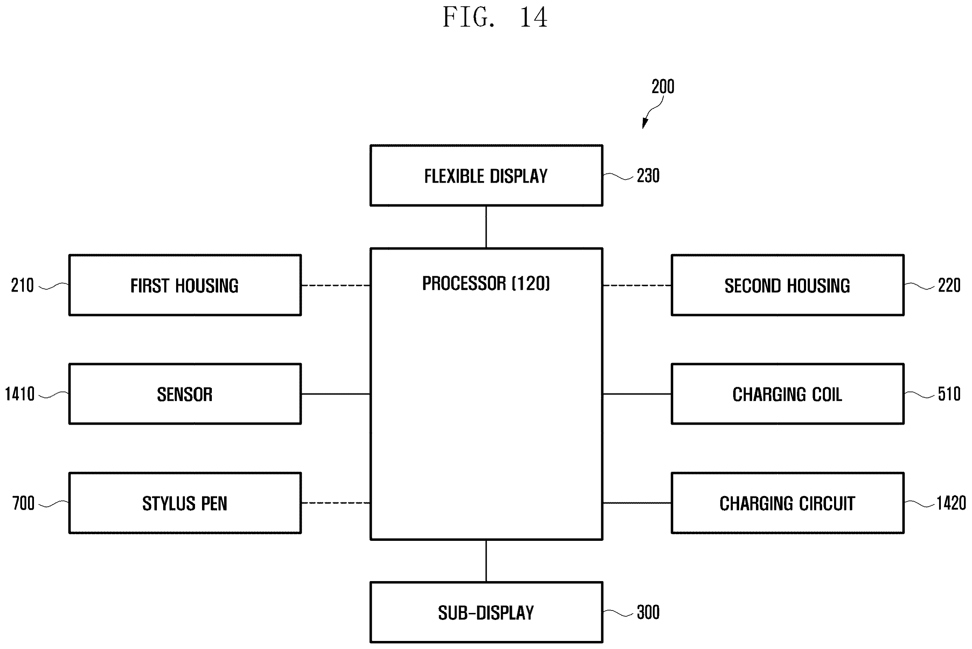

FIG. 14 is a block diagram schematically illustrating some components of a foldable electronic device according to an embodiment of the disclosure.

In various embodiments, the embodiments illustrated in FIGS. 1 to 13 described above may be integrated and applied to the foldable electronic device 200 illustrated in FIG. 14. In the description of the foldable electronic device 200 disclosed in FIG. 14, the same reference numerals may be assigned to components that are substantially identical to the components illustrated in FIGS. 1 to 13 described above, and redundant descriptions of their functions may be omitted.

Referring to FIG. 14, the foldable electronic device 200 may include a sensor 1410, a charging coil 510, a charging circuit 1420, a flexible display 230, and/or a sub-display 300.

According to an embodiment, the sensor 1410 may detect whether the first housing 210 and the second housing 220 of the foldable electronic device 200 are in the folded state or the unfolded state, and may transmit a detected signal to the processor 120. The sensor 1410 may detect whether the stylus pen 700 is attached to the outer surface of the hinge housing 310 of the foldable electronic device 200 and a position where the stylus pen is attached, and may transmit the detected signal to the processor 120. For example, the sensor 1410 may detect whether the stylus pen 700 is attached to the outer surface of the hinge housing 310 through a change in magnetic force of the first magnet 710 and/or the second magnet 720. For example, the sensor 1410 may detect whether the stylus pen 700 is attached to the outer surface of the hinge housing 310 through a change in current of the charging coil 510. The sensor 1410 may include a Hall IC sensor, a motion sensor, a distance measuring sensor, an angle sensor, a gyro sensor, a geomagnetic sensor, an acceleration sensor, and/or a proximity sensor. The sensor 1410 may include the sensor module 176 disclosed in FIG. 1.

According to an embodiment, when the processor 120 identifies through the sensor 1410 that the stylus pen 700 is attached to the outer surface of the hinge housing 310, the processor 120 may control the charging circuit 1420 and generate a magnetic induction signal. The generated magnetic induction signal may be transmitted to the charging coil 510. The charging coil 510 may transmit wireless charging power and signals to the wireless charging coil 701 of the stylus pen 700.

According to an embodiment, when the processor 120 identifies through the sensor 1410 that the stylus pen 700 is attached to the outer surface of the hinge housing 310, the processor 120 may provide a notification (e.g., a pop-up message) indicating that the stylus pen 700 is attached to the foldable electronic device 200 through a flexible display 230 (e.g., a first display) and/or a sub-display 300 (e.g., a second display). The notification may include, for example, vibration using the haptic module 179 illustrated in FIG. 1 and sound using the sound output module 155.

According to an embodiment of the disclosure, a foldable electronic device 200 may include a hinge module 320 including a first hinge assembly 321 and a second hinge assembly 322, a first housing 210 at least partially coupled to the first hinge assembly 321 and including a first printed circuit board 271, and a second housing 220 at least partially coupled to the second hinge assembly 322 and configured to be foldable and unfoldable with respect to the first housing 210. According to an embodiment, the foldable electronic device 200 may include a charging coil 510 disposed between the first hinge assembly 321 and the second hinge assembly 322, a first magnet 710 and/or a second magnet 720 disposed between the first hinge assembly 321 and the second hinge assembly 322, and a hinge housing 310 configured to cover the hinge module 320, the charging coil 510, and the first magnet 710 and/or the second magnet 720, and including a conductive material. According to an embodiment, the hinge housing 310 may include a slot 501 formed at a position corresponding to the charging coil 510 and a non-conductive plate 505 disposed in the slot 501.

According to an embodiment, the hinge housing 310 may be disposed between the first housing 210 and the second housing 220, and may be configured to be exposed to an outside when the first housing 210 and the second housing 220 are in a folded state.

According to an embodiment, in the foldable electronic device 200, a first coupling member 531 integrally connected to the hinge housing 310 may be disposed in a first direction of the charging coil 510, and a second coupling member 532 integrally connected to the hinge housing 310 may be disposed in a second direction of the charging coil 510.

According to an embodiment, in the foldable electronic device 200, an adhesive sheet 511 may be disposed above the charging coil 510, and the charging coil 510 and the non-conductive plate 505 may be configured to be bonded to each other by the adhesive sheet 511.

According to an embodiment, in the foldable electronic device 200, a support member 513 may be disposed below the charging coil 510, and a support frame 515 including a conductive material may be disposed below the support member 513.

According to an embodiment, a portion of the support frame 515 may be coupled to the first coupling member 531 through a first screw 541, and another portion of the support frame 515 may be coupled to the second coupling member 532 through a second screw 542.

According to an embodiment, the foldable electronic device 200 may further include a stylus pen 700 disposed on the outer surface of the hinge housing 310, and, during charging of the stylus pen 700 disposed on the outer surface of the hinge housing 310, heat generated from the charging coil 510 may be dispersed and dissipated through the support frame 515, the first coupling member 531, the second coupling member 532, and the hinge housing 310.

According to an embodiment, the first magnet 710 may be disposed between the first hinge assembly 321 and the charging coil 510, and the second magnet 720 may be disposed between the charging coil 510 and the second hinge assembly 322.

According to an embodiment, the foldable electronic device 200 may further include a stylus pen 700 disposed on the outer surface of the hinge housing 310, and the stylus pen 700 may include a wireless charging coil 701 disposed at a position corresponding to the charging coil 510, a third magnet 730 disposed at a position corresponding to the first magnet 710, and a fourth magnet 740 disposed at a position corresponding to the second magnet 720.

According to an embodiment, the first magnet 710 and the third magnet 730 may have opposite polarities, and the second magnet 720 and the fourth magnet 740 may have opposite polarities.

According to an embodiment, the hinge housing 310 may include a recess 801 formed on an outer surface thereof, and a non-conductive layer 810 may be disposed in the recess 801.

According to an embodiment, the non-conductive plate 505 may be configured to be removed when the non-conductive layer 810 is disposed in the recess 801.

According to an embodiment, the first hinge assembly 321 may include a first hinge gear 521a and a first spring 521b, and the second hinge assembly 322 may include a second hinge gear 522a and a second spring 522b.

According to an embodiment, the first housing 210 may include a first support member 261, which is at least partially coupled to a first portion 321a of the first hinge assembly 321 and a first portion 322a of the second hinge assembly 322, and the second housing 220 may include a second support member 262, which is at least partially coupled to a second portion 321b of the first hinge assembly 321 and a second portion 322b of the second hinge assembly 322.

According to an embodiment, in the foldable electronic device 200, an opening 601 may be formed at a predetermined position of the first housing 210, and a first FPCB 610 electrically connecting the charging coil 510 and the first printed circuit board 271 may be disposed in the opening 601.

According to an embodiment, the first FPCB 610 may be configured to be fixed by a fixing member 615 disposed in the first housing 210.

According to an embodiment, a sealing member 605 may be disposed in the opening 601.

According to an embodiment, a first waterproofing member 481 may be disposed on a portion of the first support member 261 and the hinge housing 310, and a second waterproofing member 482 may be disposed on a portion of the second support member 262 and the hinge housing 310.

According to an embodiment, the first housing 210 may further include a first rear surface cover 240, the second housing 220 may further include a second rear surface cover 250, and the foldable electronic device 200 may further include one or more magnets 1220 and 1230 disposed between the first support member 261 and the first rear surface cover 240 and/or between the second support member 262 and the second rear surface cover 250.

According to an embodiment, the first printed circuit board 271 may include a processor 120 and a sensor 1410, and the processor 120 may be configured to provide a notification through at least one display 230, 300 when the processor 120 identifies, through the sensor 1410, that the stylus pen 700 is attached to the outer surface of the hinge housing 310.

While the disclosure has been described above with reference to various embodiments according to the disclosure, it will be understood that changes and modifications made by those skilled in the art within the scope not departing from the technical spirit of the disclosure are also encompassed within the disclosure.

## Claims

1. A foldable electronic device (200) comprising:
a hinge module (320) comprising a first hinge assembly (321) and a second hinge assembly (322);
a first housing (210) at least partially coupled to the first hinge assembly (321) and comprising a first printed circuit board (271);
a second housing (220) at least partially coupled to the second hinge assembly (322) and configured to be foldable and unfoldable with respect to the first housing (210);
a charging coil (510) disposed between the first hinge assembly (321) and the second hinge assembly (322);
a first magnet (710) and/or a second magnet (720) disposed between the first hinge assembly (321) and the second hinge assembly (322); and
a hinge housing (310) configured to cover the hinge module (320), the charging coil (510), and the first magnet (710) and/or the second magnet (720), and comprising a conductive material,
wherein the hinge housing (310) comprises:
a slot (501) formed at a position corresponding to the charging coil (510); and
a non-conductive plate (505) disposed in the slot (501).

2. The foldable electronic device of claim 1,
wherein the hinge housing (310) is disposed between the first housing (210) and the second housing (220), and is configured to be exposed to an outside when the first housing (210) and the second housing (220) are in a folded state.

3. The foldable electronic device of claim 1 or 2,
wherein a first coupling member (531) integrally connected to the hinge housing (310) is disposed in a first direction of the charging coil (510), and
wherein a second coupling member (532) integrally connected to the hinge housing (310) is disposed in a second direction of the charging coil (510).

4. The foldable electronic device of claim 3,
wherein an adhesive sheet (511) is disposed above the charging coil (510),
wherein the charging coil (510) and the non-conductive plate (505) are configured to be bonded to each other through the adhesive sheet (511),
wherein a support member (513) is disposed below the charging coil (510), and
wherein a support frame (515) comprising a conductive material is disposed below the support member (513).

5. The foldable electronic device of claim 4,
wherein a portion of the support frame (515) is coupled to the first coupling member (531) through a first screw (541), and
wherein another portion of the support frame (515) is coupled to the second coupling member (532) through a second screw (542).

6. The foldable electronic device of claim 5, further comprising:
a stylus pen (700) disposed on an outer surface of the hinge housing (310),
wherein, during charging of the stylus pen (700) disposed on the outer surface of the hinge housing (310), heat generated from the charging coil (510) is dispersed and dissipated through the support frame (515), the first coupling member (531), the second coupling member (532), and the hinge housing (310).

7. The foldable electronic device of claim 1, wherein the first magnet (710) is disposed between the first hinge assembly (321) and the charging coil (510), and
wherein the second magnet (720) is disposed between the charging coil (510) and the second hinge assembly (322).

8. The foldable electronic device of claim 1 or 7, further comprising:
a stylus pen (700) disposed on an outer surface of the hinge housing (310),
wherein the stylus pen (700) comprises:
a wireless charging coil (701) disposed at a position corresponding to the charging coil (510);
a third magnet (730) disposed at a position corresponding to the first magnet (710) and having a polarity opposite to that of the first magnet (710); and
a fourth magnet (740) disposed at a position corresponding to the second magnet (720) and having a polarity opposite to that of the second magnet (720).

9. The foldable electronic device of claim 1,
wherein the hinge housing (310) comprises a recess (801) formed on an outer surface,
wherein a non-conductive layer (810) is disposed in the recess (801), and
wherein the non-conductive plate (505) is configured to be removed when the non-conductive layer (810) is disposed in the recess (801).

10. The foldable electronic device of claim 1,
wherein the first hinge assembly (321) comprises a first hinge gear (521a) and a first spring (521b), and
wherein the second hinge assembly (322) comprises a second hinge gear (522a) and a second spring (522b).

11. The foldable electronic device of claim 1,
wherein the first housing (210) comprises a first support member (261) at least partially coupled to a first portion (321a) of the first hinge assembly (321) and a first portion (322a) of the second hinge assembly (322), and
wherein the second housing (220) comprises a second support member (262) at least partially coupled to a second portion (321b) of the first hinge assembly (321) and a second portion (322b) of the second hinge assembly (322).

12. The foldable electronic device of claim 1,
wherein an opening (601) is formed at a predetermined position of the first housing (210),
wherein a first FPCB (610) electrically connecting the charging coil (510) and the first printed circuit board (271) is disposed in the opening (601),
wherein the first FPCB (610) is configured to be fixed by a fixing member (615) disposed in the first housing (210), and
wherein a sealing member (605) is disposed in the opening (601).

13. The foldable electronic device of claim 11,
wherein a first waterproofing member (481) is disposed on a portion of the first support member (261) and the hinge housing (310), and
wherein a second waterproofing member (482) is disposed on a portion of the second support member (262) and the hinge housing (310).

14. The foldable electronic device of claim 11,
wherein the first housing (210) further comprises a first rear surface cover (240),
wherein the second housing (220) further comprises a second rear surface cover (250), and
wherein the foldable electronic device (200) further comprises at least one magnet (1220, 1230) disposed between the first support member (261) and the first rear surface cover (240) and/or between the second support member (262) and the second rear surface cover (250).

15. The foldable electronic device of claim 8,
wherein the first printed circuit board (271) comprises a processor (120) and a sensor (1410), and
wherein the processor (120) is configured to provide a notification through at least one display (230, 300) when the processor (120) identifies, through the sensor (1410), that the stylus pen (700) is attached to the outer surface of the hinge housing (310).
